(19) Europäisches Patentamt / European Patent Office / Office européen des brevets

(11) **EP 3 261 863 B1**

(12) **EUROPÄISCHE PATENTSCHRIFT**

(45) Veröffentlichungstag und Bekanntmachung des Hinweises auf die Patenterteilung:
**28.11.2018 Patentblatt 2018/48**

(51) Int Cl.:
**B60G 17/0165** *(2006.01)* **B60G 17/019** *(2006.01)*

(21) Anmeldenummer: **16703254.9**

(22) Anmeldetag: **02.02.2016**

(86) Internationale Anmeldenummer:
**PCT/EP2016/000165**

(87) Internationale Veröffentlichungsnummer:
**WO 2016/134818 (01.09.2016 Gazette 2016/35)**

(54) **VERFAHREN ZUM KOMPENSIEREN VON VERTIKALEN BEWEGUNGEN**

METHOD FOR COMPENSATING FOR VERTICAL MOVEMENTS

PROCÉDÉ DE COMPENSATION DE MOUVEMENTS VERTICAUX

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.02.2015 DE 102015002595**

(43) Veröffentlichungstag der Anmeldung:
**03.01.2018 Patentblatt 2018/01**

(73) Patentinhaber: **Audi AG**
**85045 Ingolstadt (DE)**

(72) Erfinder:
• **UNGER, Andreas**
**85080 Gaimersheim (DE)**
• **GÖHRLE, Christoph**
**85049 Ingolstadt (DE)**

(56) Entgegenhaltungen:
| | |
|---|---|
| DE-A1-102006 026 937 | DE-A1-102012 024 984 |
| DE-A1-102012 216 205 | DE-T2- 69 315 865 |
| GB-A- 2 389 828 | GB-A- 2 391 327 |
| US-A- 5 034 890 | US-A1- 2007 276 576 |
| US-A1- 2014 330 483 | US-B1- 6 176 494 |

EP 3 261 863 B1

**Beschreibung**

Die Erfindung betrifft ein Verfahren und ein System zum Kompensieren von vertikal orientierten Bewegungen eines Aufbaus eines Fahrzeugs.

Eine Lage eines Fahrzeugs ändert sich während einer Fahrt in Abhängigkeit einer Neigung bzw. Lage einer Straße, die von dem Fahrzeug befahren wird. Winkel zum Erfassen der Lage des Fahrzeugs können durch Sensoren erfasst werden. Außerdem wird die Lage des Fahrzeugs durch Unebenheiten der Straße, bspw. durch Schlaglöcher oder Kopfsteinpflaster, beeinflusst.

Ein Verfahren zum Steuern eines Systems eines Fahrzeugs ist in der Druckschrift DE 10 2006 026 937 A1 beschrieben. Dabei wird ein Stabilitätsindex bestimmt. Außerdem werden ein erster und ein zweiter Beobachter bereitgestellt, die auf Grundlage von Betriebsgrößen des Fahrzeugs eine Referenz-Quergeschwindigkeit sowie eine Quergeschwindigkeit bestimmen, aus denen eine Ausgangs-Quergeschwindigkeit sowie eine Ausgangs-Längsgeschwindigkeit bestimmt werden.

Ein Verfahren zum Bestimmen einer Soll-Kurvenneigung eines Fahrzeugs beim Befahren eines kurvenförmigen Fahrbahnabschnitts ist aus der Druckschrift DE 10 2012 024 984 A1 bekannt. Hierbei wird die Soll-Kurvenneigung des Fahrzeugs in Abhängigkeit einer erfassten Fahrbahnkrümmung bestimmt. Außerdem wird eine optische Oberflächenbeschaffenheit des kurvenförmigen Fahrbahnabschnitts berücksichtigt.

Ein Verfahren zum Verarbeiten von Sensordaten in einem Fahrzeug ist in der Druckschrift DE 10 2012 216 205 A1 beschrieben, wobei Fahrdynamikdaten und Chassissensordaten des Fahrzeugs erfasst und gefiltert werden. Die Druckschrift US 2014/0330483 A1 zeigt eine Inertialsensorik mit einem aktiven Fahrwerk ohne die Kombination der Regler.

Die Druckschriften US 6 176 494 B1, DE 693 15 865 T2, US 5 034 890 A1 und GB 23 91 327 A1 offenbaren weitere relevante Verfahren und Systeme zum Kompensieren von vertikal orientierten Bewegungen des Aufbaus eines Fahrzeugs.

Vor diesem Hintergrund werden ein Verfahren und ein System mit den Merkmalen der unabhängigen Patentansprüche vorgestellt. Ausgestaltungen des Verfahrens und des Systems gehen aus den abhängigen Patentansprüchen und der Beschreibung hervor.

Das erfindungsgemäße Verfahren ist zum Kompensieren von vertikal orientierten Bewegungen eines Aufbaus eines Fahrzeugs vorgesehen. Das Fahrzeug weist den Aufbau und ein aktives Fahrwerk mit mehreren Rädern auf, die sich mit der Fahrbahn in Kontakt befinden, wobei jedes Rad über einen in seiner Länge verstellbareren Aktor an einem dem Rad zugeordneten Aufhängepunkt mit dem Aufbau verbunden ist. Weiterhin ist vorgesehen, dass vertikal orientierte Bewegungen des Aufbaus durch eine Neigung der Fahrbahn und/oder durch Unebenheiten der Fahrbahn verursacht werden. Bei dem Verfahren wird eine erste Änderung der Länge mindestens eines Aktors zur Kompensation der Neigung der Fahrbahn für Frequenzen in einem ersten, niedrigen Frequenzbereich, der durch eine erste Minimalfrequenz und eine erste Maximalfrequenz begrenzt wird, und/oder eine zweite Änderung der Länge des mindestens einen Aktors zur Kompensation von Unebenheiten der Fahrbahn, die Schwingungen des Aufbaus verursachen, für Frequenzen in einem zweiten, hohen Frequenzbereich, der durch eine zweite Minimalfrequenz und eine zweite Maximalfrequenz begrenzt ist, durchgeführt.

Üblicherweise ist die erste Maximalfrequenz des niedrigen Frequenzbereichs tiefer bzw. niedriger als die zweite Minimalfrequenz des hohen Frequenzbereichs, so dass die Frequenzbereiche voneinander getrennt sind.

Alternativ ist die erste Maximalfrequenz des niedrigen Frequenzbereichs höher als die zweite Minimalfrequenz des hohen Frequenzbereichs. In diesem Fall sind die beiden Frequenzbereiche überlagert.

Beispielsweise beträgt bei dem niedrigen Frequenzbereich die erste Minimalfrequenz 0 Hz und die erste Maximalfrequenz mindestens 0,5 Hz, maximal 1 Hz. Bei dem hohen Frequenzbereich beträgt die zweite Minimalfrequenz mindestens 0,1 Hz, in der Regel 0,5 Hz, maximal 1 Hz und die zweite Maximalfrequenz mindestens 0,1 Hz, in der Regel 5 Hz, maximal 20 Hz.

Weiterhin wird mindestens eine Minimalfrequenz und/oder mindestens eine Maximalfrequenz an eine Eckfrequenz bzw. Grenzfrequenz jeweils eines der Aktoren angepasst.

Bei dem aktiven Fahrwerk liegt die Eckfrequenz üblicherweise bei 5 Hz, evtl. ist auch eine Eckfrequenz bis zu 20 Hz möglich, da der Aufbau durch Unebenheiten der Fahrbahn mit einer Frequenz bis maximal 20 Hz angeregt wird. Die zweite Maximalfrequenz entspricht üblicherweise der Eckfrequenz

Jeweils einem Aktor werden zu dessen Ansteuerung zur Kompensation der Neigung Stellsignale im niedrigen Frequenzbereich und zur Kompensation der Unebenheiten Stellsignale im hohen Frequenzbereich bereitgestellt, wobei die Stellsignale im niedrigen Frequenzbereich und im hohen Frequenzbereich durch ein Additionsmodul zu einem gemeinsamen überlagerten Stellsignal addiert werden. Somit wird die Länge eines jeweiligen Aktors auf Grundlage von zwei überlagerten Änderungen der Länge verändert.

In Ausgestaltung wird eine Neigung des Aufbaus in die zumindest eine Raumrichtung ermittelt, wobei für mindestens ein Rad ein vertikaler Abstand zu dem ihm zugeordneten Aufhängepunkt des Aufbaus erfasst wird. Dabei wird über den mindestens einen ermittelten Abstand eine Neigung des Fahrwerks in die zumindest eine Raumrichtung durch Transformation des vertikalen Abstands des mindestens einen Rads zu dem Aufbau mit einer Transformationsmatrix

$$T = \begin{bmatrix} l_v & l_v & -l_h & -l_h \\ t_v & -t_v & t_h & -t_h \end{bmatrix}$$

berechnet. Die Neigung der Fahrbahn in die zumindest eine Raumrichtung wird aus einer Differenz der Neigung des Aufbaus in die zumindest eine Raumrichtung und der Neigung des Fahrwerks in die zumindest eine Raumrichtung ermittelt. Weiterhin wird jeweils ein Wert für mindestens einen Winkel $\phi_s$, $\theta_s$, um den die Fahrbahn in die zumindest eine Raumrichtung geneigt ist, ermittelt und jeweils ein Grenzwert $\phi_{s,lim}$, $\phi_{s,lim}$ für den Wert des mindestens einen Winkels $\phi_s$, $\theta_s$ vorgegeben, wobei
Übersetzungsverhältnisse $i_{VA}$, $i_{HA}$ für einen Abstand des mindestens einen Aktors bezogen auf den Aufbau und für einen Abstand des mindestens einen Rads bezogen auf den Aufbau berücksichtigt werden. Darauf basierend wird ein Soll-Wert für eine Änderung der Länge des mindestens einen Aktors durch

$$\overrightarrow{z_{akt}} = diag(i_{VA}, i_{VA}, i_{HA}, i_{HA})T^T \begin{bmatrix} \phi_{s,lim} \\ \theta_{s,lim} \end{bmatrix}$$

bestimmt.

Die Neigung des Fahrwerks in die mindestens eine Raumrichtung wird durch Transformation des vertikalen Abstands des mindestens einen Rads zu einen Schwerpunkt des Aufbaus mit der Transformationsmatrix

$$T = \begin{bmatrix} l_v & l_v & -l_h & -l_h \\ t_v & -t_v & t_h & -t_h \end{bmatrix}$$

ermittelt. Hierbei beschreibt eine vordere, longitudinale Strecke $l_v$ einen Abstand eines jeweiligen vorderen Rads von einem Schwerpunkt des Aufbaus in longitudinaler Raumrichtung, eine hintere, longitudinale Strecke $l_h$ den Abstand des jeweiligen hinteren Rads von dem Schwerpunkt in longitudinaler Raumrichtung, eine vordere, transversale Strecke $t_v$, den Abstand des vorderen Rads von dem Schwerpunkt in transversaler Raumrichtung und eine hintere, transversale Strecke $t_h$ den Abstand des hinteren Rads von dem Schwerpunkt in transversaler Raumrichtung.
Die Übersetzungsverhältnisse $i_{VA}$, $i_{HA}$ werden über einen Abstand jeweils eines Aktors von dem Schwerpunkt des Aufbaus und jeweils eines Rads von dem Schwerpunkt des Aufbaus berechnet.
Je nach Definition wird bei Vorliegen einer Steigungsauffahrt ein negativer Nickwinkel $\theta_s$ und bei Vorliegen einer Steigungsabfahrt ein positiver Nickwinkel $\theta_s$ ermittelt.
Der jeweilige Grenzwert $\phi_{s,lim}$, $\theta_{s,lim}$ für den Wert des mindestens einen Winkels $\phi_s$, $\theta_s$ wird durch

$$\phi_{s,lim} = \begin{cases} \phi_{s,max} \text{ wenn } \phi_s > \phi_{s,max} \\ \phi_{s,min} \text{ wenn } \phi_s < \phi_{s,min} \\ \phi_s \text{ sonst} \end{cases}$$

$$\theta_{s,lim} = \begin{cases} \theta_{s,max} \text{ wenn } \theta_s > \theta_{s,max} \\ \theta_{s,min} \text{ wenn } \theta_s < \theta_{s,min} \\ \theta_s \text{ sonst} \end{cases}$$

vorgegeben.
Außerdem ist möglich, einen Betrag von $\theta_{s,min}$ im Fall der Steigungsauffahrt größer als einen Betrag von $\theta_{s,max}$ im Fall der Steigungsabfahrt zu wählen.
Zum Ermitteln der Neigung des Aufbaus wird ein erstes, aufbaufestes Koordinatensystem und zum Ermitteln der Neigung des Fahrwerks ein zweites fahrwerkfestes Koordinatensystem verwendet. Ein drittes, inertiales Koordinatensystem wird als Referenz-Koordinatensystem verwendet, das auf die Gravitationskraft bezogen ist.

Weiterhin wird die Neigung des Aufbaus bezüglich des Referenzkoordinatensystems über ein Quaternion beschrieben.

In Ausgestaltung wird ein Strapdown-Algorithmus verwendet, mit dem vorgesehen ist, dass zum Ermitteln einer korrigierten Beschleunigung des Fahrzeugs eine sensorische gemessene Beschleunigung um eine Zentrifugalbeschleunigung und die Gravitationsbeschleunigung korrigiert wird und daraus eine Geschwindigkeit des Fahrzeugs in einer Ebene bestimmt wird. Außerdem wird die Neigung des Aufbaus berechnet.

Schwingungen des Aufbaus, die bei Überfahren der Unebenheiten auftreten, werden durch einen Algorithmus zur kontinuierlichen Dämpfungskontrolle, nämlich einem sogenannten Skyhook-Algorithmus, in dem zweiten, hohen Frequenzbereich kompensiert.

Der Skyhook-Algorithmus bzw. eine Skyhook-Funktion basiert auf einer gezielten Dämpfung des Aufbaus des Kraftfahrzeugs mit einem virtuellen Dämpfer, der eine Dämpfungskonstante $d_{sky}$ aufweist. Zur Umsetzung der Skyhook-Funktion wird als Betriebsparameter eine Beschleunigung des Aufbaus in vertikaler Richtung ermittelt, über die Zeit integriert und gefiltert.

Dabei wird eine Geschwindigkeit des Aufbaus in vertikaler Richtung berechnet und durch Beaufschlagung des Aktors mit der Skyhook-Funktion eine zu der Geschwindigkeit des Aufbaus in vertikaler Richtung proportionale Kraft als Stellgröße, die in vertikaler Richtung orientiert ist, bereitgestellt. Eine aus der Skyhook-Funktion resultierende Wirkung wird dem virtuellen Dämpfer bereitgestellt, der mit dem Aufbau und einem inertialen Referenzsystem, z. B. dem Himmel, verbunden ist, weshalb die Funktion auch als "Skyhook" bzw. "Himmelshaken" bezeichnet wird, da der Aufbau des Kraftfahrzeugs nach vorgesehener Definition über den virtuellen Dämpfer mit dem Himmel verbunden ist, wodurch das Kraftfahrzeug bei einer Fahrt über der üblicherweise als Straße ausgebildeten Fahrbahn zu schweben scheint.

Das erfindungsgemäße System ist zum Kompensieren einer Neigung eines Fahrzeugs in zumindest einer Raumrichtung ausgebildet, wobei das Fahrzeug einen Aufbau und ein aktives Fahrwerk mit mehreren Rädern aufweist, die sich mit der Fahrbahn in Kontakt befinden. Das System weist mehrere Sensoren und ein Kontrollgerät auf, wobei jedes Rad über einen in seiner Länge verstellbareren Aktor an einem dem Rad zugeordneten Aufhängepunkt mit dem Aufbau verbunden ist. Vertikal orientierte Bewegungen des Aufbaus werden durch eine Neigung der Fahrbahn und/oder durch Unebenheiten der Fahrbahn verursacht. Das Kontrollgerät ist dazu ausgebildet, den Aktoren Stellsignale bereitzustellen und deren Länge zu kontrollieren, wobei eine erste Änderung der Länge mindestens eines Aktors zur Kompensation der Neigung der Fahrbahn für Frequenzen in einem ersten, niedrigen Frequenzbereich, der durch eine erste Minimalfrequenz und eine erste Maximalfrequenz begrenzt ist, und/oder wobei eine zweite Änderung der Länge des mindestens einen Aktors zur Kompensation von Unebenheiten der Fahrbahn für Frequenzen in einem zweiten, hohen Frequenzbereich, der durch eine zweite Minimalfrequenz und eine zweite Maximalfrequenz begrenzt ist, durchzuführen ist.

Bei diesem System ist in Ausgestaltung vorgesehen, dass ein erster Sensor dazu ausgebildet ist, eine Neigung des Aufbaus in die zumindest eine Raumrichtung zu ermitteln, wobei mindestens ein zweiter Sensor dazu ausgebildet ist, für mindestens ein Rad einen vertikalen Abstand zu dem ihm zugeordneten Aufhängepunkt des Aufbaus zu erfassen. Das Kontrollgerät ist dazu ausgebildet, über den mindestens einen ermittelten Abstand eine Neigung des Fahrwerks in die zumindest eine Raumrichtung durch Transformation des vertikalen Abstands des mindestens einen Rads zu dem Aufbau mit einer Transformationsmatrix

$$T = \begin{bmatrix} l_v & l_v & -l_h & -l_h \\ t_v & -t_v & t_h & -t_h \end{bmatrix}$$

zu berechnen. Das Kontrollgerät ist weiterhin dazu ausgebildet, die Neigung der Fahrbahn in die zumindest eine Raumrichtung aus einer Differenz der Neigung des Aufbaus in die zumindest eine Raumrichtung und der Neigung des Fahrwerks in die zumindest eine Raumrichtung zu ermitteln, und jeweils einen Wert für mindestens einen Winkel $\phi_s$, $\theta_s$, um den die Fahrbahn in die zumindest eine Raumrichtung geneigt ist, zu ermitteln. Jeweils ein Grenzwert $\phi_{s,lim}$, $\theta_{s,lim}$ für den Wert des mindestens einen Winkels $\phi_s$, $\theta_s$ ist bzw. wird vorgegeben. Das Kontrollgerät ist zudem dazu ausgebildet, Übersetzungsverhältnisse $i_{VA}$, $i_{HA}$ für einen Abstand des mindestens einen Aktors bezogen auf den Aufbau und für einen Abstand des mindestens einen Rads bezogen auf den Aufbau zu berücksichtigen, wobei das Kontrollgerät dazu ausgebildet ist, einen Soll-Wert für eine Änderung einer Länge des mindestens einen Aktors durch

$$\overrightarrow{z_{akt}} = \mathrm{diag}(i_{VA}, i_{VA}, i_{HA}, i_{HA})\mathrm{T}^{\mathrm{T}}\begin{bmatrix}\phi_{s,lim}\\\theta_{s,lim}\end{bmatrix}$$

zu bestimmen.

Der mindestens eine zweite Sensor ist als Abstandssensor ausgebildet.

Das Kontrollgerät weist einen Horizontierungsregler mit einem Tiefpassfilter auf, der dazu ausgebildet ist, dem jeweiligen Aktor Stellsignale im niedrigen Frequenzbereich bereitzustellen. Alternativ ist der Tiefpassfilter dem Horizontierungsregler nachgeschaltet.

Außerdem weist das Kontrollgerät einen Grundregler mit einem Bandpassfilter auf, der dazu ausgebildet ist, dem jeweiligen Aktor Stellsignale im hohen Frequenzbereich bereitzustellen. Eventuell weist das Kontrollgerät auch einen Vorausschauregler mit einem Bandpassfilter auf, der dazu ausgebildet ist, dem jeweiligen Aktor Stellsignale im hohen Frequenzbereich bereitzustellen.

In alternativer Ausgestaltung ist möglich, dass ein jeweiliger Bandpassfilter dem Grundregler und/oder dem Vorausschauregler nachgeschaltet ist.

Unabhängig von einer jeweiligen Kombination eines der genannten Regler mit einem jeweiligen Tiefpass- oder Bandpassfilter, also unabhängig davon, ob der Tiefpass- oder Bandpassfilter in einem jeweiligen Regler integriert oder diesem nachgeschaltet ist, sind sowohl der Tiefpass- oder Bandpassfilter als auch der jeweilige Regler dazu ausgebildet, frequenzabhängig Stellsignale bereitzustellen.

Mit dem Verfahren und dem System wird bzw. ist mit den Aktoren des aktiven Fahrwerks eine Funktion zur Horizontierung des Aufbaus zur Kompensation der Neigung der Fahrbahn mit einer Funktion zur aktiven Schwingungsdämpfung zur Kompensation von Unebenheiten der Fahrbahn kombiniert.

In Ausgestaltung ist der Horizontierungsregler des Aufbaus mit dem Grundregler und ggf. ergänzend mit dem Vorschauregler des aktiven Fahrwerks, mit denen die aktive Schwingungsdämpfung umzusetzen ist, frequenzabhängig zu kombinieren.

Mit dem aktiven Fahrwerk ist der Aufbau des Kraftfahrzeugs bezogen auf das Schwerefeld zu horizontieren und somit horizontal auszurichten bzw. zu orientieren. Außerdem sind mit dem aktiven Fahrwerk Schwingungen aktiv zu dämpfen. Mit dem Verfahren ist ein dynamisches Verhalten des Fahrzeugs, das durch Schwingungen des Aufbaus in vertikaler Richtung aufgrund von Unebenheiten der Fahrbahn sowie durch die Neigung der Fahrbahn verursacht wird, auszugleichen.

Bei Durchführung des Verfahrens werden die Aktoren des aktiven Fahrwerks, über die die Räder mit dem Aufbau des Fahrzeugs verbunden sind, gleichzeitig zur aktiven Schwingungsdämpfung und zur Horizontierung des Aufbaus genutzt. Stellsignale zum Kontrollieren und somit zum Steuern und/oder Regeln einer Länge und/oder einer Änderung der Länge eines jeweiligen Aktors werden über Signalfilter bereitgestellt, wobei über eine Länge eines jeweiligen Aktors ein Abstand jenes Rads, das über diesen Aktor mit dem Aufbau verbunden ist, zu dem Aufbau dynamisch anzupassen ist. Dabei ist im Rahmen des Verfahrens vorgesehen, jeweilig nutzbare Frequenzbereiche für die Schwingungsdämpfung einerseits und die Horizontierung andererseits über derartige Signalfilter zu trennen. Somit ist u. a. eine gegenseitige negative Beeinflussung der unterschiedlichen Stellsignale durch frequenzselektive Trennung der zum Stellen der Aktoren vorgesehenen Stellsignale zu vermeiden. Üblicherweise sind die unterschiedlichen Stellsignale aus den beiden vorgesehenen Frequenzbereichen zu addieren.

In Ausgestaltung wird zur Horizontierung des Aufbaus ein niederfrequentes Stellsignal bereitgestellt, wodurch die Länge eines jeweiligen Aktors mit einer entsprechend niedrigen Frequenz an die Neigung der Straße angepasst wird, wobei sich die Neigung der Straße in der Regel ebenfalls mit einer niedrigen Frequenz verändert, die üblicherweise noch geringer als eine Frequenz des Frequenzbereichs ist, mit der der Aufbau horizontiert wird. Ein hochfrequentes Stellsignal wird zum Ausgleich von jenen Schwingungen des Aufbaus bereitgestellt, die durch Unebenheiten der Fahrbahn, bspw. aufgrund von Schlaglöchern oder Kopfsteinpflaster verursacht werden, wobei sich eine Oberfläche der Straße aufgrund derartiger Unebenheiten in der Regel ebenfalls mit einer hohen Frequenz ändert. Eine Länge eines jeweiligen Aktors wird in Ausgestaltung durch zwei überlagerte, frequenzabhängige Korrekturwerte zur Änderung der Länge verändert, die einander überlagert werden. Dabei ist die Länge durch einen ersten Korrekturwert zur Kompensation der Neigung der Fahrbahn mit der niedrigen Frequenz des niedrigen Frequenzbereichs und durch einen zweiten Korrekturwert zur Kompensation der Unebenheiten der Fahrbahn mit der hohen Frequenz des hohen Frequenzbereichs zu korrigieren.

Wird die Neigung der Fahrbahn durch das aktive Fahrwerk kompensiert, wird der Aufbau auf das inertiale Koordinatensystem bzw. Referenz-Koordinatensystem ausgerichtet, wobei aus den Winkeln $\phi_s$ und $\theta_s$ sowie der Transformationsmatrix T Stellgrößen für die Aktoren berechnet werden. Somit bleibt der Aufbau unabhängig von der Neigung der Fahrbahn stets horizontiert.

Bei der Ansteuerung des aktiven Fahrwerks werden neben der Horizontierung noch weitere Funktionen berücksichtigt. Dabei ist die Horizontierung im niederfrequenten bis statischen Bereich über den Horizontierungsregler umzusetzen, wohingegen für Funktionen in einem höherfrequenten, dynamischen Bereich zum Ausgleich der Unebenheiten der Fahrbahn der Grundregler und optional der Vorausschauregler eingesetzt wird bzw. werden.

Über den Grundregler werden die bei der Überfahrt von Unebenheiten der Fahrbahn auftretenden Schwingungen aktiv gedämpft, wobei bspw. ein Skyhook-Algorithmus eingesetzt wird, um vertikale Bewegungen des Aufbaus zu reduzieren. Zusätzlich ist auch der Vorausschauregler einzusetzen, über den die Unebenheiten proaktiv bzw. vorausschauend oder voraushandelnd ausgeregelt werden. Es kann aber auch jeder beliebige andere Regler eingesetzt werden, durch den ein dynamisches Verhalten des Aufbaus zu beeinflussen ist. Üblicherweise wird mindestens ein Regler, bspw. der Grund- und/oder der Vorschauregler, in einem Frequenzbereich ab ca. 0,5 Hz und mehr zur Regelung der für den Aufbau und das Rad relevanten Schwingungen, die durch Unebenheiten der Fahrbahn verursacht werden, verwendet.

Die Horizontierung ist mit dem Horizontierungsregler dagegen nur in dem Frequenzbereich zwischen 0 Hz (im statischen Bereich) bis ca. 0,5 Hz (im niederfrequenten Bereich) zu verwenden. Der Aufbau des Fahrzeugs wird somit nur an geländebedingten Steigungen oder Gefällen ausgerichtet, die Dämpfung von Schwingungen, die durch Bodenwellen induziert werden, wird durch den Grund- bzw. Vorausschauregler durchgeführt.

Hierzu werden die von den genannten Reglern bereitzustellenden Stellsignale zum Ansteuern der Aktoren frequenzabhängig gefiltert, wobei bei der Horizontierung eine Tiefpass-Filterung mit einer Eckfrequenz von bspw. maximal 0,5 Hz verwendet wird. Die Stellsignale zum Ansteuern der Aktoren, die mit dem Vorausschau- und ggf. dem Grundregler bereitgestellt werden, werden über eine Bandpass-Filterung auf den Frequenzbereich zwischen ca. 0,5 Hz bis beispielsweise ca. 5 Hz konditioniert. Die obere Grenze ist dabei jeweils auf eine Eckfrequenz eines jeweiligen Aktors des aktiven Fahrwerks abzustimmen.

Die Eckfrequenzen der Aktoren werden in einer Variante geringfügig variiert, so dass z. B. auch ein kleiner Überlappungsbereich der beiden zu berücksichtigenden Frequenzbereiche entstehen kann. So ist denkbar, die Eckfrequenz des Tiefpass-Filters für die Horizontierung auf ca. 1 Hz zu erhöhen, wohingegen die untere Grenze des Bandpass-Filters für den Grundregler bzw. den Vorausschauregler auf ca. 0,5 Hz eingestellt werden kann: Dadurch werden Randeffekte aufgrund von Phasenverzügen im Bereich der Eckfrequenzen minimiert.

Zur Arbitrierung bzw. Schätzung werden die Stellsignale der einzelnen Regler nachfolgend addiert, da durch die Filterung eine gegenseitige nachteilige Beeinflussung der Stellsignale ausgeschlossen ist.

Weitere Vorteile und Ausgestaltungen der Erfindung ergeben sich aus der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsformen in den Zeichnungen schematisch dargestellt und wird unter Bezugnahme auf die Zeichnungen schematisch und ausführlich beschrieben.

Figur 1 zeigt in schematischer Darstellung ein Bespiel für ein Fahrzeug mit einer Ausführungsform des erfindungsgemäßen Systems.

Figur 2 zeigt ein Diagramm zu einer Ausführungsform des erfindungsgemäßen Verfahrens.

Figur 3 zeigt das Fahrzeug aus Figur 1 bei unterschiedlichen Varianten der Ausführungsform des erfindungsgemäßen Verfahrens.

Figur 4 zeigt in schematischer Darstellung ein Detail eines Kontrollgeräts des erfindungsgemäßen Systems.

Die Figuren werden zusammenhängend und übergreifend beschrieben, gleiche Bezugsziffern bezeichnen dieselben Komponenten.

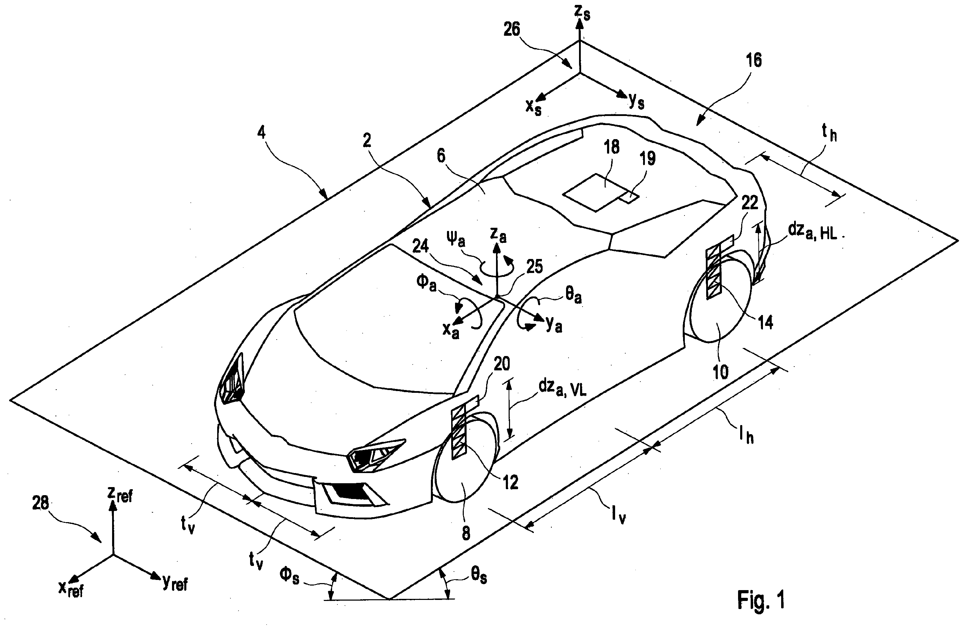

In Figur 1 sind ein als Kraftfahrzeug ausgebildetes Fahrzeug 2 und eine als Straße ausgebildete Fahrbahn 4, auf der sich das Fahrzeug 2 während einer Fahrt bewegt, schematisch dargestellt. Dabei umfasst das Fahrzeug 2 einen Aufbau 6 und vier zur Fortbewegung des Fahrzeugs 2 vorgesehene Räder 8, 10, von denen in Figur 1 lediglich ein vorderes linkes Rad 8 und ein hinteres linkes Rad 10 gezeigt sind. Jedes Rad 8, 10 ist zumindest über einen aktiven Aktor 12, 14 mit dem Aufbau 6 verbunden, wobei die Räder 8, 10 und Aktoren 12, 14 als Komponenten eines aktiven Fahrwerks des Fahrzeugs 2 ausgebildet sind.

Die Ausführungsform des erfindungsgemäße Systems 16 umfasst als Komponenten ein Kontrollgerät 18, mindestens einen ersten Sensor 19 zum Bestimmen der Neigung des Aufbaus 6 sowie mehrere, hier vier als Abstandssensoren 20, 22 ausgebildete, zweite Sensoren, von denen in Figur 1 lediglich zwei dargestellt sind, wobei jedem Rad 8, 10 ein derartiger Abstandssensor 20, 22 zugeordnet ist. Der mindestens eine erste Sensor 19 und die Abstandssensoren 20, 22 sind zugleich als Komponenten einer Sensoranordnung des Systems 16 ausgebildet. Weiterhin umfassen die Sensoranordnung und somit das System 16 nicht weiter dargestellte Sensoren zum Bestimmen, in der Regel zum Messen, mindestens einer kinematischen Größe, üblicherweise einer Geschwindigkeit und/oder Beschleunigung, des Fahrzeugs 2 und/oder des Aufbaus 6.

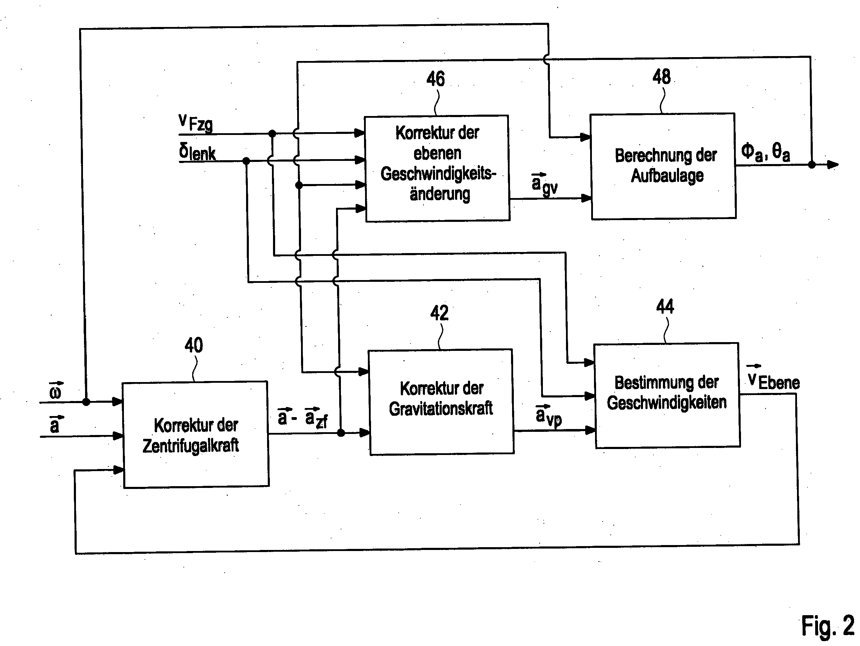

Die nachfolgend u. a. anhand des Diagramms aus Figur 2 beschriebene Ausführungsform des erfindungsgemäßen Verfahrens ist mit der in Figur 1 schematisch dargestellten Ausführungsform des erfindungsgemäßen Systems 16 durchzuführen, wobei Schritte der Ausführungsform des Verfahrens durch das Kontrollgerät 18 zu kontrollieren und somit zu steuern und/oder zu regeln sind.

Außerdem sind in Figur 1 drei Koordinatensysteme 24, 26, 28 sowie diverse, hier geometrische Parameter dargestellt.

Dabei ist ein erstes, aufbaufestes Koordinatensystem 24 dem Aufbau 6 des Fahrzeugs 2 zugeordnet, wobei dessen Ursprung im Schwerpunkt 25 des Aufbaus 6 liegt. Das erste Koordinatensystem 24 umfasst eine erste Achse in Raumrichtung $x_a$, die longitudinal zu dem Aufbau 6 sowie parallel zu einer Fahrtrichtung des Fahrzeugs 2 orientiert ist. Eine zweite Achse ist in Raumrichtung $y_a$, die transversal zu dem Aufbau 6 sowie parallel zu Achsen des Fahrzeugs 2, die sich zwischen jeweils zwei Rädern 8, 10 des Fahrzeugs 2 erstrecken, orientiert. Eine dritte Achse ist in Raumrichtung $z_a$ parallel zu einer Hochachse des Aufbaus 6 orientiert. Alle drei genannten Achsen und somit Raumrichtungen $x_a$, $y_a$, $z_a$ sind zueinander senkrecht orientiert. Dabei ist in Ausgestaltung vorgesehen, dass die beiden erstgenannten Achsen und somit die Raumrichtungen $x_a$ und $y_a$ eine horizontale Ebene des Fahrzeugs 2 aufspannen, in der der Schwerpunkt 25 liegt.

Weiterhin zeigt Figur 1 zwei Beispiele für vertikal orientierte Abstände $dz_{a,VL}$, $dz_{a,HL}$. Ein erster Abstand $dz_{a,VL}$ bezieht sich auf eine Distanz zwischen dem Rad 8 vorne links und dem Aufbau 6. Ein zweiter Abstand $dz_{a,HL}$ bezieht sich auf eine Distanz zwischen dem Rad 10 hinten links und dem Aufbau 6. Diese Abstände $dz_{a,VL}$, $dz_{a,HL}$ sind entlang der Aktoren 12, 14 orientiert und durch die den Rädern 8, 10 zugeordneten Abstandssensoren 20, 22 zu erfassen.

Abstände der Räder 8, 10 zu dem Schwerpunkt 25 des Aufbaus 6 in einer zu der horizontalen Ebene parallelen Ebene sind hier über die Längen bzw. Seitenlängen oder Strecken $t_v$, $t_h$, $l_h$, $l_v$ zu definieren. Hierbei sind für das Rad 8 vorne links eine vordere, transversale Strecke $t_v$, die den Abstand des Rads 8 von dem Schwerpunkt 25 in transversaler Raumrichtung beschreibt, und eine vordere, longitudinale Strecke $l_v$, die den Abstand des Rads 8 von dem Schwerpunkt 25 in longitudinaler Raumrichtung beschreibt, zu berücksichtigen. Für das Rad 10 hinten links sind eine hintere, transversale Strecke $t_h$, die den Abstand des Rads 10 von dem Schwerpunkt 25 in transversaler Raumrichtung beschreibt, und eine hintere, longitudinale Strecke $l_h$, die den Abstand des Rads 10 von dem Schwerpunkt 25 in longitudinaler Raumrichtung beschreibt, zu berücksichtigen.

Ein weiterer vertikal orientierter Abstand $dz_{a,VR}$ bezieht sich auf eine Distanz zwischen- einem hier nicht gezeigten Rad vorne rechts und dem Aufbau 6.

Ein zusätzlicher Abstand $dz_{a,HR}$ in vertikaler Richtung bezieht sich auf eine Distanz zwischen einem hier nicht gezeigten Rad hinten rechts und dem Aufbau 6. Die beschriebenen Abstände $dz_{a,VL}$, $dz_{a,HL}$. $dz_{a,VR}$, $dz_{a,HR}$ bzw. Distanzen zwischen den Rädern 8, 10 und dem Aufbau 6 sind in Ausgestaltung auf die horizontale Ebene bezogen, in der der Schwerpunkt 25 liegt.

Weiterhin sind für das Rad vorne rechts die vordere, transversale Strecke $t_v$, die den Abstand des Rads vorne rechts von dem Schwerpunkt 25 in transversaler Raumrichtung beschreibt, und die vordere, longitudinale Strecke $l_v$, die den Abstand des Rads vorne rechts von dem Schwerpunkt 25 in longitudinaler Raumrichtung beschreibt, zu berücksichtigen. Für das Rad hinten rechts sind die hintere, transversale Strecke $t_h$, die den Abstand dieses Rads von dem Schwerpunkt 25 in transversaler Raumrichtung beschreibt, und die hintere, longitudinale Strecke $l_h$, die den Abstand des Rads hinten rechts von dem Schwerpunkt 25 in longitudinaler Raumrichtung beschreibt, zu berücksichtigen, wobei in Figur 1 die für das Rad hinten rechts zu berücksichtigende, hintere transversale Strecke nicht eingezeichnet ist.

Ein zweites, fahrwerkfestes Koordinatensystem 26 ist der Fahrbahn 4 zugeordnet und umfasst eine erste Achse in Raumrichtung $x_s$ parallel zu einer vorgesehenen Fahrtrichtung bzw. Längsrichtung der Fahrbahn 4, eine zweite Achse in Raumrichtung $y_s$, die parallel zu einer Querrichtung der Fahrbahn 4 orientiert ist, und eine dritte Achse in Raumrichtung $z_s$, wobei alle genannten Achsen zueinander senkrecht orientiert sind. Eine Neigung und somit eine Lage der Fahrbahn 4 ist hier anhand eines Querwinkels bzw. Wankwinkels $\phi_s$, der eine Neigung der Fahrbahn 4 in Querrichtung beschreibt, und anhand eines Längswinkels bzw. Nickwinkels $\theta_s$, der eine Neigung der Fahrbahn 4 in Längsrichtung und somit bspw. eine Steigung oder eine Gefälle beschreibt, zu beschreiben.

Ein drittes Koordinatensystem 28 ist als Referenz-Koordinatensystem ausgebildet und umfasst eine erste Achse in Raumrichtung $x_{ref}$, eine zweite Achse in Raumrichtung $y_{ref}$ und eine dritte Achse in Raumrichtung $z_{ref}$, die alle zueinander senkrecht orientiert sind.

Außerdem sind dem ersten Koordinatensystem 24 ein Wankwinkel $\phi_a$, der eine Drehung des Aufbaus 6 um die erste, in Raumrichtung $x_a$ orientierte Achse beschreibt, ein Nickwinkel $\theta_a$, der eine Drehung des Aufbaus 6 um die

zweite, in Raumrichtung $y_a$ orientierte Achse beschreibt, und ein Gierwinkel $\psi_a$, der eine Drehung des Aufbaus 6 um die dritte, in Raumrichtung $z_a$ orientierte Achse beschreibt, gezeigt.

Das erste, aufbaufeste Koordinatensystem 24 [$x_a$, $y_a$, $z_a$] im Schwerpunkt 25 des Aufbaus 6 des Fahrzeugs 2 folgt translatorischen und rotatorischen Bewegungen des Aufbaus 6. Das dritte, inertiale Koordinatensystem 28 [$x_{ref}$, $y_{ref}$, $z_{ref}$] wird als Referenz-Koordinatensystem herangezogen, wobei berücksichtigt wird, dass die Gravitationsbeschleunigung g ausschließlich in Raumrichtung $z_{ref}$ parallel zu einem Gravitationsvektor wirkt.

In der Ausführungsform des Verfahrens werden zur Schätzung einer Neigung bzw. Lage des Aufbaus 6 der Nickwinkel $\theta_a$ und der Wankwinkel $\phi_a$ auf das dritte, als Referenz-Koordinatensystem ausgebildete Koordinatensystem 28 bezogen.

Die zwischen dem aufbaufesten Koordinatensystem 24 und dem Referenzsystem bzw. inertialen Koordinatensystemen 28 eingeschlossenen Winkel [$\theta_a$, $\phi_a$, $\psi_3$] werden auch als inertialer Nickwinkel $\theta_a$, inertialer Wankwinkel $\phi_a$ und inertialer Gierwinkel $\psi_a$ bezeichnet. Als Neigung des Aufbaus 6 wird dessen Orientierung in Nickrichtung und Wankrichtung bezeichnet, woraus der Nickwinkel $\theta_a$ und der Wankwinkel $\phi_a$ bestimmt werden.

Um die Neigung bzw. Lage des Aufbaus 6 zu schätzen, werden die Beschleunigung $\vec{a} = [\ddot{x}_a, \ddot{y}_a, \ddot{z}_a]^T$ des Aufbaus 6 bzw. des Fahrzeugs 2 entlang der Raumrichtungen $x_a$, $y_a$, $z_a$ und die Drehraten $\vec{\omega} = [\dot{\psi}_a, \dot{\phi}_a, \dot{\Theta}_a]^T$ mit der Sensoranordnung zum Bestimmen der Trägheit mit sechs Freiheitsgraden (IMU- Inertial Measurement Unit) gemessen und somit ermittelt, wobei die Sensoranordnung auch unabhängig von der Durchführung des Verfahrens in dem Fahrzeug 2 eingesetzt werden kann.

Zur Schätzung der Neigung des Aufbaus 6 ist zunächst zu berücksichtigen, welchen physikalischen Randbedingungen die von der Sensoranordnung bspw. durch Messen zu ermittelnden Größen $\vec{a}$ und $\vec{\omega}$ ausgesetzt sind. Aus gemessenen Signalen von Beschleunigungssensoren der Sensoranordnung werden drei unterschiedliche physikalische Größen abgeleitet:

- die von den Drehraten $\vec{\omega}$ und der ebenen Geschwindigkeit $\overrightarrow{v_{Ebene}} = [v_{Ebene,x}, v_{Ebene,y}, v_{Ebene,z}]^T$ des Fahrzeugs 2 abhängige Zentrifugalbeschleunigung $\overrightarrow{a_{zf}}$:

$$\overrightarrow{a_{zf}} = \vec{\omega} \times \overrightarrow{v_{Ebene}} \tag{3}$$

- die Änderung der bereinigten, ebenen Geschwindigkeit $\overrightarrow{v_{Ebene}}$ und somit Beschleunigung $\overrightarrow{a_{vp}}$ des Fahrzeugs 2 und/oder des Aufbaus 6 in Raumrichtung einer Achse eines jeweiligen Beschleunigungssensors in der horizontalen Ebene des Fahrzeugs:

$$\overrightarrow{a_{vp}} = R \, \dot{\overrightarrow{v_{Ebene}}} \tag{4}$$

- die Gravitationsbeschleunigung $\overrightarrow{a_{gv}} = R \, [0, 0, -g]^T \tag{5}$

In obigen Formeln ist $\overrightarrow{v_{Ebene}}$ die Geschwindigkeit des Fahrzeugs 2 in der horizontalen Ebene und R die Eulersche Drehmatrix (6), die unter Berücksichtigung der Eulerschen Winkel in einer Drehreihenfolge des Wankwinkels $\phi$, des Nickwinkels $\theta$ und des Gierwinkels $\psi$ berechnet wird. Hierbei ist $v_{Ebene,x}$ die übliche Geschwindigkeit des Fahrzeugs $v_{Fzg}$ in Längs- bzw. Fahrtrichtung des Fahrzeugs 2, die über eine Drehzahl der Räder 8, 10 gemessen und dem Tachometer angezeigt wird.

$$R = \begin{pmatrix} \cos\theta\cos\psi & \cos\theta\sin\psi & -\sin\theta \\ \sin\phi\sin\theta\cos\psi - \cos\phi\sin\psi & \sin\phi\sin\theta\sin\psi + \cos\phi\cos\psi & \sin\phi\cos\theta \\ \cos\phi\sin\theta\cos\psi + \sin\phi\sin\psi & \cos\phi\sin\theta\cos\psi - \sin\phi\cos\psi & \cos\phi\cos\theta \end{pmatrix} \tag{6}$$

Die jeweils zu bestimmenden Winkel $\phi$, d. h. $\phi_a$ (für den Aufbau), $\phi_f$ (für das Fahrwerk) bzw. $\phi_s$ (für die Fahrbahn), und $\theta$, d. h. $\theta_a$ (für den Aufbau), $\theta_f$ (für das Fahrwerk) bzw. $\theta_s$ (für die Fahrbahn), können üblicherweise über zwei unterschiedliche Berechnungsmethoden bzw. Herangehensweisen zur Berechnung ermittelt werden:

- durch zeitliche Integration der durch die Sensoranordnung gemessenen Drehraten $\vec{\omega}$, oder

- durch Eliminierung der Zentrifugalbeschleunigung $\vec{a_{zf}}$ und der Änderung der ebenen Geschwindigkeit $\vec{v_{Ebene}}$ und somit der Beschleunigung $\vec{a_{vp}}$ des Fahrzeugs 2 aus den durch die Sensoranordnung gemessenen Beschleunigungen $\vec{a_{gv}} = \vec{a} - \vec{a_{zf}} - \vec{a_{vp}}$ und Berechnung der Winkel über trigonometrische Funktionen $\theta_a = \mathrm{atan}\ \dfrac{a_{gv,x}}{a_{gv,z}}$, $\theta_a$ $\phi_a = \mathrm{atan}\ \dfrac{a_{gv,y}}{a_{gv,z}}$.

Wie bereits anhand von Gleichung (5) angedeutet, ist $\vec{a_{gv}}$ ein Vektor mit den drei Elementen $[a_{gv,x}, a_{gv,y}, a_{gv,z}]^T = [g*\sin\theta, -g*\sin\phi*\cos\theta, -g*\cos\phi*\cos\theta]^T$, wohingegen die Erdbeschleunigung g = 9, 81 m/s$^2$ hier als ein Skalar verwendet wird, das sich je nach Neigung des Aufbaus 6, die mit der Eulerschen Drehmatrix R (6) beschrieben wird, auf unterschiedliche Elemente des Vektors $\vec{a_{gv}}$ auswirkt. Ist der Aufbau 6 nicht geneigt, so ist $\vec{a_{gv}} = [0,0, -g]^T$. Bei einem Wankwinkel $\phi_a$ = 90° und einem Nickwinkel $\theta_a$ = 0° ist $\vec{a_{gv}} = [0, -g, 0]^T$. Ist $\vec{a_{gv}}$ bekannt, können der Nickwinkel $\theta_a$ und der Wankwinkel $\phi_a$ über die oben beschriebenen atan-Funktionen berechnet werden.

Allerdings ist bei den durchzuführenden Berechnungen zu berücksichtigen, dass aufgrund von zeitlich variablen Offset-Fehlern von Drehratensensoren eine Integration der Drehraten ggf. stationär ungenau ist. Dies bedeutet, dass berechnete Winkel niederfrequent driften und nur hochfrequente Anteile von gessenen Signalen nutzbar sind. Bei den über Beschleunigungssensoren ermittelten Winkeln ist dagegen mit hochfrequenten Störungen zu rechnen, da schwer zu erfassende Änderungen der Geschwindigkeit, die bspw. bei der Überfahrt von Schlaglöchern auftreten, nicht aus den gemessenen Signalen eliminiert werden können.

In der hier beschriebenen Ausführungsform wird als Filteralgorithmus ein auf Quaternionen basierender Neigungsfilter bzw. Lagefilter verwendet. Ebenso ist es möglich, einen Kalman-Filter für die Fusion beider Berechnungsmethoden einzusetzen. Hierdurch werden beide voranstehenden genannten Berechnungsmethoden vereint, wodurch ein Signal bereitgestellt wird, das sowohl niederfrequent als auch hochfrequent nutzbar ist.

Ein Quaternion ist ein vierdimensionaler Vektor $\vec{q} = [q_1, q_2, q_3, q_4]^T$. über den die Orientierung eines starren Körpers, hier des Aufbaus 6, zu beschreiben ist. Ist ein starrer Körper bezogen auf ein Referenzsystem um den Winkel $\chi$ und die Achse $\vec{r} = [r_x, r_y, r_z]^T$ gedreht, wobei $\vec{r}$ ein Einheitsvektor ist, so wird diese Orientierung bezogen auf das Referenzsystem durch das Quaternion

$$\vec{q} = \left[\cos\frac{\chi}{2}, -r_x\sin\frac{\chi}{2}, -r_y\sin\frac{\chi}{2}, -r_z\sin\frac{\chi}{2}\right]^T$$

beschrieben.

Dies wird zunächst für die zeitliche Integration der durch die Sensoranordnung gemessenen Drehraten $\vec{\omega}$ genutzt, wobei der Aufbau 6 bezogen auf das inertiale Referenzsystem im vorliegenden Fall mit der Drehrate $\vec{\omega} = [\omega_x, \omega_y, \omega_z]^T$ rotiert. Ausgehend von einer Ausgangslage $\vec{q_L}$ des Aufbaus 6 wird die Änderung der Lage bzw. Neigung aufgrund der Drehraten durch die Gleichung (7):

$$\vec{\dot{q}_\omega} = \frac{1}{2}\vec{q_L}\otimes[0, \omega_x, \omega_y, \omega_z] \tag{7}$$

beschrieben. Der Operator $\otimes$ symbolisiert hier eine Quaternionenmultiplikation. In einem zeitdiskreten Fall ist eine resultierende Differentialgleichung bspw. durch eine Euler-Integration (8):

$$\vec{q_{\omega,k}} = \vec{q_{L,k-1}} + \vec{\dot{q}_\omega}\Delta t \tag{8}$$

zu lösen, wobei $\Delta t$ einer Schrittweite zwischen zwei Zeitpunkten k und k-1 entspricht.

Um eine Orientierung des Aufbaus 6 aus der durch die Sensoranordnung gemessenen Beschleunigung $\vec{a}$ und resultierenden, bereinigten Gravitationsbeschleunigung $\vec{a_{gv}} = [a_{gv,x}, a_{gv,y}, a_{gv,z}]^T = [g * \sin\theta, -g * \sin\phi * \cos\theta, -g * \cos\phi * \cos\theta]^T$ mit Quaternionen zu beschreiben, ist nachfolgendes Optimierungsproblem (9):

$$\vec{q_a} = \min_{q_L \in \Re^4} \vec{f}(\vec{q_L}, \vec{a_{gv}}) \quad \text{mit } \vec{f}(\vec{q_L}, \vec{a_{gv}}) = \begin{bmatrix} 2(q_{L,2}q_{a,4} - q_{L,1}q_{L,3}) - a_{gv,x} \\ 2(q_{L,1}q_{L,2} + q_{L,3}q_{L,4}) - a_{gv,y} \\ 2(0,5 - q_{L,2}^2 - q_{L,3}^2) - a_{gv,z} \end{bmatrix} \quad (9)$$

zu lösen. Eine direkte Berechnung der Neigung ist nicht möglich, da um eine Rotationsachse, die parallel zum Gravitationsvektor orientiert ist, unendlich viele Lösungen existieren. Zur zeitdiskreten Lösung des Optimierungsproblems kommt ein gradientenbasierter Ansatz (10):

$$\vec{q_{a,k}} = \vec{q_{L,k-1}} - \mu \frac{\vec{\nabla f}(\vec{q_{L,k-1}}, \vec{a_{gv}})}{\left\| \vec{\nabla f}(\vec{q_{L,k-1}}, \vec{a_{gv}}) \right\|} \quad (10)$$

mit einer einstellbaren Schrittweite $\mu$ zur Anwendung.

Um Informationen über die Neigung, die aus den gemessenen Drehraten $\vec{q_{\omega,k}}$ und aus den Beschleunigungen $\vec{q_{a,k}}$ resultiert, zu fusionieren, werden die beiden Quaternionen $\vec{q_{a,k}}$ $\vec{q_{L,k}}$ über Gleichung (11) gewichtet addiert:

$$\vec{q_{L,k}} = \gamma \vec{q_{a,k}} + (1-\gamma)\vec{q_{\omega,k}} \quad (11)$$

wobei $0 \le \gamma \le 1$ ein einstellbarer Parameter ist. Die Nickwinkel und Wankwinkel werden dann mit den Gleichungen (12a), (12b):

$$\theta_{a,k} = -\sin^{-1}(2q_{L,k,2}q_{L,k,4} + q_{L,k,1}q_{L,k,3}) \quad (12a)$$

$$\phi_{a,k} = \text{atan}\left( \frac{2q_{L,k,3}q_{L,k,4} - 2q_{L,k,1}q_{L,k,2}}{2q_{L,k,1}^2 + 2q_{L,k,4}^2 - 1} \right) \quad (12b)$$

berechnet.

Zur Eliminierung der Zentrifugalbeschleunigung $\vec{a_{zf}}$ und der Änderung $\vec{a_{vp}}$ der ebenen Geschwindigkeit $\vec{v_{Ebene}}$ aus den durch die Sensoranordnung gemessenen Beschleunigungen sind die Nick- und Wankwinkel zu berücksichtigen, die wiederum mit Hilfe des Gravitationsbeschleunigungsvektors $\vec{a_{gv}}$ berechnet werden.

Zur Durchführung der Ausführungsform des Verfahrens wird ein sogenannter Strapdown-Ansätz verwendet, der in dem Diagramm aus Figur 2 dargestellt ist. Einzelne Schritte 40, 42, 44, 46, 48 des Verfahrens werden nachfolgend näher beschrieben.

Zu Beginn des Verfahrens werden sensorisch ermittelte Werte der Beschleunigung $\vec{a}$ und der Drehrate $\vec{\omega}$ bereitgestellt. Mit diesen Werten wird in einem ersten Schritt 40 eine "Korrektur der Zentrifugalkraft" durchgeführt, wobei die durch die Sensoranordnung gemessenen Beschleunigungen um den Anteil der Zentrifugalkraft $\vec{a_{zf}} = \vec{\omega} \times \vec{v_{Ebene}}$ korrigiert werden. Dabei wird eine erste korrigierte Beschleunigung $\vec{a} - \vec{a_{zf}}$ bestimmt. Diese erste korrigierte Beschleunigung $\vec{a} - \vec{a_{zf}}$ wird unter Berücksichtigung von Werten für den Wankwinkel $\phi_a$ und den Nickwinkel $\theta_a$ in einem zweiten Schritt 42 unter Durchführung einer "Korrektur der Gravitationskraft" mit der Gravitationsbeschleunigung $\vec{a_{gv}}$ korrigiert, woraus die Beschleunigung $\vec{a_{vp}}$ in der horizontalen Ebene resultiert.

Im Rahmen des Verfahrens sind zwei Möglichkeiten, die ebene Geschwindigkeit $\vec{v_{Ebene}}$ zu berechnen, vorgesehen.

Eine "Bestimmung der Geschwindigkeiten" wird in einem dritten Schritt 44 unter Berücksichtigung der Beschleunigung $\overrightarrow{a_{vp}}$ des Fahrzeugs 2, der gemessenen Geschwindigkeit v des Fahrzeugs 2 und dessen Lenkwinkel $\delta_{lenk}$ durchgeführt, wobei die erste ebene Geschwindigkeit des Fahrzeugs $\overrightarrow{v_{Int}}$ = [$v_{Int,x}$, $v_{Int,y}$, $v_{Int,z}$]$^T$ durch Integration (13):

$$\overrightarrow{v_{Int}} = \int \overrightarrow{a_{vp}} dt \qquad\qquad (13)$$

der Beschleunigung $\overrightarrow{a_{vp}}$ des Fahrzeugs 2 berechnet und somit ermittelt wird. Diese ebene Geschwindigkeit $\overrightarrow{v_{Int}}$ wird wiederum in einem geschlossenen Regelkreis zur "Korrektur der Zentrifugalkraft" im ersten Schritt 40 verwendet.

Für die Geschwindigkeit $v_{Ebene,x}$ in Raumrichtung einer Längsachse des Fahrzeugs 2 steht hierbei die über die Raddrehzahlen gemessene Geschwindigkeit $v_{Fzg}$ in Richtung $x_a$ des Fahrzeugs 2 zur Verfügung. Unter Zuhilfenahme eines Einspurmodells ist es weiterhin möglich, aus dem Lenkwinkel $\delta_{lenk}$ und der gemessenen Geschwindigkeit $v_{Fzg}$ eine zur Querachse des Kraftfahrzeugs wirksame Geschwindigkeit $v_{y,ESM}$ zu berechnen. Für die vertikale Geschwindigkeit $v_{Ebene,z}$ steht keine weitere Mess- bzw. Berechnungsmethode zur Verfügung. Die alternativ ermittelte zweite ebene Geschwindigkeit des Fahrzeugs (14):

$$\overrightarrow{v_{alt}} = \left[v_{Fzg}, v_{y,ESM}, 0\right]^T \qquad\qquad (14)$$

und die durch Integration (13) berechnete Geschwindigkeit $\overrightarrow{v_{Int}}$ können durch einen geeigneten Filteralgorithmus, wie bspw. durch ein Kalman-Filter (15), über eine Berechnungsvorschrift, die einen Gewichtungsfaktor $\tau$ umfasst:

$$\overrightarrow{v_{Ebene}} = \tau \overrightarrow{v_{Int}} + (1-\tau)\overrightarrow{v_{alt}} \quad \text{mit } 0 \le \tau \le 1 \qquad\qquad (15)$$

fusioniert werden.

In einem vierten Schritt 46 zur "Korrektur der ebenen Geschwindigkeitsänderung" werden Werte der gemessenen Geschwindigkeit $v_{Fzg}$, des Lenkwinkels $\delta_{lenk}$, der Winkel $\theta_a$, $\phi_a$ und die durch die Zentrifugalbeschleunigung $\overrightarrow{a_{zf}}$ korrigierte Beschleunigung $\overrightarrow{a}$ - $\overrightarrow{a_{zf}}$ berücksichtigt, wobei die korrigierte Beschleunigung durch den Anteil der Änderung der ebenen Geschwindigkeit $\overrightarrow{a_{vp,alt}}$ = $R\overrightarrow{v_{alt}}$ korrigiert wird. Um eine negative Rückkopplung zu vermeiden, wird die Ableitung eines Vektors der Geschwindigkeit $\overrightarrow{v_{alt}}$ statt der laut der Berechnungsvorschrift (15) ermittelten Geschwindigkeit $\overrightarrow{v_{Ebene}}$ verwendet.

In einem fünften Schritt 48 werden unter Berücksichtigung der Drehrate $\overrightarrow{\omega}$ und der Gravitationsbeschleunigung $\overrightarrow{a_{gv}}$ des Fahrzeugs 2 der Nickwinkel $\theta_a$ sowie der Wankwinkel $\phi_a$ und somit die Neigung bzw. Lage des Aufbaus 6 des Fahrzeugs 2 mit dem voranstehend beschriebenen, auf Quaternionen basierenden Neigungsfilter berechnet. Über die voranstehend beschriebene Vorgehensweise werden der Nickwinkel $\theta_a$ und der Wankwinkel $\phi_a$ bezogen auf das inertiale Koordinatensystem 28 bestimmt und in einem geschlossenen Regelkreis zur "Korrektur der Gravitationskraft" im zweiten Schritt 42 sowie zur "Korrektur der eben Geschwindigkeitsänderung" im dritten Schritt 44 verwendet.

Ausgehend von der im fünften Schritt 48 ermittelten Neigung des Aufbaus 6 wird die Neigung und somit die Lage der Fahrbahn 4 ermittelt, wobei die Abstände $\overrightarrow{dz_a}$ = [$dz_{a,VL}$, $dz_{a,VR}$, $dz_{a,HL}$, $dz_{a,HR}$]$^T$ zwischen den Rädern 8, 10 und dem Aufbau 6 als gemessene Größen hinzugezogen werden, wodurch zunächst der Nickwinkel $\theta_f$ und der Wankwinkel $\phi_f$ des Fahrwerks des Fahrzeugs 2 berechnet werden, wobei eine durchzuführende Berechnung von einer Transformationsmatrix (16) abhängig ist:

$$T = \begin{bmatrix} l_v & l_v & -l_h & -l_h \\ t_v & -t_v & t_h & -t_h \end{bmatrix} \qquad\qquad (16)$$

mit der eine geometrische Lage des Schwerpunkts 25 bezogen auf die Positionen der Räder 8, 10 beschrieben wird bzw. ist. Dabei beschreibt die erste Spalte den Abstand des Rads 8 vorne links, die zweite Spalte den Abstand des Rads vorne rechts, die dritte Spalte den Abstand des Rads 10 hinten links und die vierte Spalte den Abstand des Rads hinten rechts zu dem Schwerpunkt 25 innerhalb der horizontalen Ebene.

Die Neigung des Fahrwerks wird dann über den vektoriellen Zusammenhang (17):

$$\begin{bmatrix} \phi_f \\ \theta_f \end{bmatrix} = T \, \overrightarrow{dz_a} \qquad (17)$$

bestimmt.

Durch die Subtraktion der Neigung des Fahrwerks von der Neigung des Aufbaus 6 wird die Neigung der Fahrbahn 4 im Bezug zum aufbaufesten, ersten Koordinatensystem 24 über den vektoriellen Zusammenhang (18):

$$\begin{bmatrix} \phi_s \\ \theta_s \end{bmatrix} = \begin{bmatrix} \phi_a \\ \theta_a \end{bmatrix} - \begin{bmatrix} \phi_f \\ \theta_f \end{bmatrix} \qquad (18)$$

berechnet. Da eine Reifeneinfederung der Räder 8, 10 im Vergleich zu einem zu berücksichtigenden Abstand sehr gering ist, wird diese in obiger Rechnung vernachlässigt.

Da die Winkel $\phi_a$ und $\theta_a$ auf den Vektor bezogene Schätzgrößen für die Neigung des Aufbaus 6 sind und $\phi_f$ und $\theta_f$ die relativen Winkel zwischen dem Aufbau 6 und der Oberfläche der Fahrbahn 4 beschreiben, stehen mit $\phi_s$ und $\theta_s$ ebenfalls Winkel als geschätzte Größen für die Neigung der Fahrbahn 4 bzw. Straße bezogen auf den Gravitationsvektor zur Verfügung.

Bei Umsetzung des Verfahrens ist dem aktiven Fahrwerk des Fahrzeugs 2 durch Korrektur einer Neigung des Aufbaus 6 eine Kompensation der Neigung der Fahrbahn 4 zu erreichen und demnach der Aufbau 6 zu horizontieren bzw. horizontal auszurichten.

Diesbezüglich ist anhand von Soll-Werten für eine Änderung von Längen der Aktoren 12, 14 vorzugeben, in welchem Maß eine derartige Kompensation der Neigung bzw. eine Horizontierung des Aufbaus vorzunehmen ist. So ist durch Anpassen jeweiliger Längen der Aktoren 12, 14 an die Soll-Werte bei einer Steigungs- bzw. Bergauffahrt quantitativ eine stärkere Horizontierung als bei Steigungs- bzw. Bergabfahrt vorzusehen.

Bei einer Steigungsauffahrt wird der Aufbau 6 des Fahrzeugs 2 hinten angehoben und vorne abgesenkt, wodurch eine Sicht der Insassen zu verbessern und ein Komfort zu erhöhen ist. Bei einer Steigungsabfahrt wird der Aufbau 6 vorne angehoben und hinten abgesenkt, allerdings ist hierbei im Vergleich zur Steigungsauffahrt eine deutlich geringere Kompensation der Neigung vorzunehmen, um die Sicht der Insassen nicht zu verschlechtern und einen Bodenfreigang des Aufbaus 6 bei einem Übergang von der Steigungs- bzw. einer Hangabfahrt in die Waagrechte zu gewährleisten.

Ebenso ist denkbar, den Aufbau 6 quer zur Fahrtrichtung des Fahrzeugs 2 zu horizontieren, wobei eine Kompensation der Neigung des Aufbaus 6 in Querrichtung ebenfalls durch Vorgabe von Soll-Werten beschränkt werden kann, um beispielsweise Fahrsituationen zu vermeiden, durch die ein Bodenfreigang eingeschränkt werden könnte.

Zur Umsetzung des Verfahrens werden die errechneten Neigungswinkel der Fahrbahn $\phi_s$ und $\theta_s$ zunächst durch Vorgabe von Soll- bzw. Grenzwerten $\phi_{s,lim}$, $\theta_{s,lim}$ limitiert:

$$\phi_{s,lim} = \begin{cases} \phi_{s,max} & \text{wenn } \phi_s > \phi_{s,max} \\ \phi_{s,min} & \text{wenn } \phi_s < \phi_{s,min} \\ \phi_s & \text{sonst} \end{cases} \qquad (19)$$

$$\theta_{s,lim} = \begin{cases} \theta_{s,max} & \text{wenn } \theta_s > \theta_{s,max} \\ \theta_{s,min} & \text{wenn } \theta_s < \theta_{s,min} \\ \theta_s & \text{sonst} \end{cases} \qquad (20)$$

Danach werden die Neigungswinkel $\phi_s$, $\theta_s$ auf Soll-Werte $\overrightarrow{z_{art}} = [z_{akt,VL}, z_{akt,VR}, z_{akt,HL}, z_{akt,HR}]^T$ zur Änderung von Längen der Aktoren 20, 22 des aktiven Fahrwerks, umgerechnet. Eine Umrechnung der limitierten Nick- und Wankwinkel der Fahrbahn 4 auf die Soll-Werte für Längen der Aktoren 20, 22 wird unter Zuhilfenahme der Transformationsmatrix T und von bekannten Übersetzungsverhätnissen zwischen aktorbezogenen und radbezogenen Abständen

$$i_{VA} = \frac{z_{akt,VL}}{dz_{a,VL}} = \frac{z_{akt,VR}}{dz_{a,VR}} \quad \text{und} \quad i_{HA} = \frac{z_{akt,HL}}{dz_{a,HL}} = \frac{z_{akt,HR}}{dz_{a,HR}}$$ für die Vorderachse und die Hinterachse des Fahrzeugs 2 durchgeführt, woraus eine Diagonalmatrix $\mathrm{diag}(i_{VA}, i_{VA}, i_{HA}, i_{HA})$ gebildet wird. Hierbei wird für die aktorbezogenen Soll-Werte der nachfolgende Zusammenhang mit der transponierten Transformationsmatrix (16) verwendet:

$$\overrightarrow{z_{akt}} = \mathrm{diag}(i_{VA}, i_{VA}, i_{HA}, i_{HA}) T^T \begin{bmatrix} \phi_{s,lim} \\ \theta_{s,lim} \end{bmatrix} \qquad \cdot (21)$$

In obigen Formeln sind die Maximal- bzw. Minimalwinkel $\phi_{s,max}$, $\theta_{s,max}$, $\phi_{s,min}$ und $\theta_{s,min}$ einstellbare Abstimmparameter bzw. Soll-Werte, die abhängig von einer jeweiligen Fahrsituation verändert werden können.

In einem Anwendungsbeispiel werden nachfolgende Ausgangswerte vorgegeben:

$$i_{VA} = i_{HA} = 1; t_v = t_h = 0{,}5; l_v = l_h = 1{,}5 \qquad (22)$$

$$\phi_{s,lim} = \frac{1}{180}\pi; \ \theta_{s,lim} = 0 \qquad (23)$$

Daraus resultiert:

$$\overrightarrow{z_{akt}} = [0{,}026 \quad 0{,}026 \quad -0{,}026 \quad -0{,}026]^T \qquad (24)$$

Dies bedeutet, dass die vorderen Aktoren um 2,6 cm nach oben und die hinteren Aktoren 20, 22 um 2,6 cm nach unten bewegt werden, wobei Längen der jeweiligen Aktoren 20, 22 gemäß der hier angegebenen Strecken verändert werden.

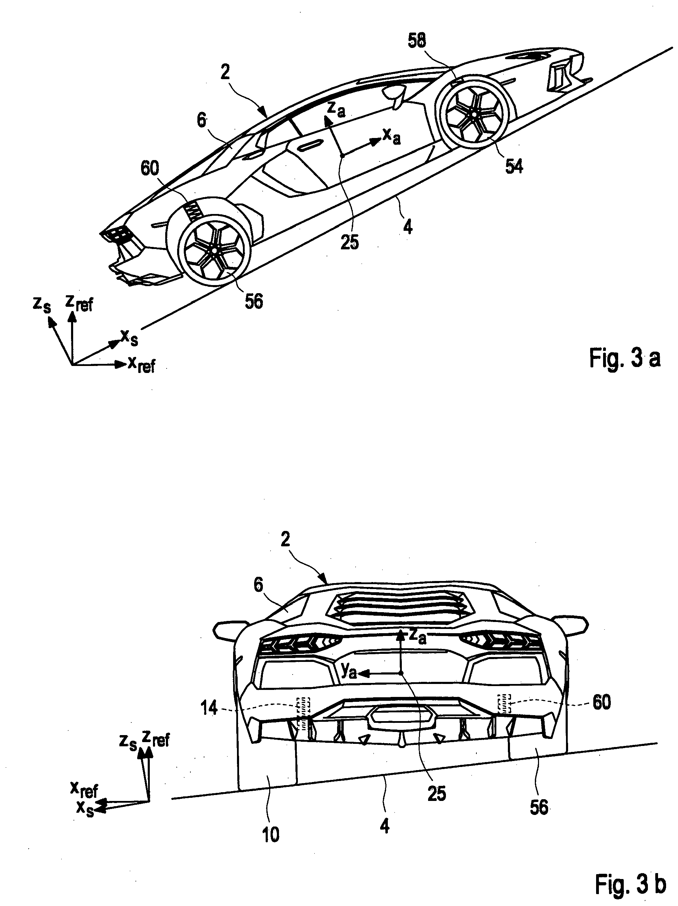

Das Fahrzeug 2 ist in Figur 3a bei einer Steigungsauffahrt auf der Fahrbahn 4 und in Figur 3b bei einer üblicherweise waagrechten Fahrt auf einer seitlich, quer zur Fahrtrichtung geneigten Fahrbahn, bspw. in einer Steilkurve, schematisch dargestellt. Außerdem sind in Figur 3a ein Rad 54 des Fahrzeugs 2 vorne rechts und ein Rad 56 des Fahrzeugs 2 hinten rechts dargestellt. Hier ist vorgesehen, dass das Rad 54 vorne rechts über einen Aktor 58 mit einem Aufhängepunkt des Aufbaus 6 des Fahrzeugs 2 verbunden ist, wohingegen das Rad 56 hinten rechts über einen Aktor 60 mit einem Aufhängepunkt des Aufbaus 6 verbunden ist.

In Anlehnung an die Darstellung aus Figur 1 weist das Rad 54 vorne rechts zu dem Aufbau 6 den Abstand $dz_{a,VR}$ und zu dem Schwerpunkt 25 den Abstand $t_v$ auf. Der dem Rad 54 vorne rechts zugeordnete Aktor 58 weist einen Abstand $z_{akt,VR}$ zu dem Aufbau 6 und einen Abstand $t_{v,akt}$ zu dem Schwerpunkt 25 des Aufbaus auf. Entsprechend weist das Rad 56 hinten rechts zu einem Aufhängepunkt des Aufbaus 6 den Abstand $dz_{a,HR}$ und zu dem Schwerpunkt 25 den Abstand $t_h$ auf. Der dem Rad 56 hinten rechts zugeordnete Aktor 60 weist einen Abstand $z_{akt,HR}$ zu einem Aufhängepunkt des Aufbaus 6 und einen Abstand $t_{h,akt}$ zu dem Schwerpunkt 25 des Aufbaus 6 auf.

Unter Berücksichtigung der voranstehend beschriebenen Schritte des erfindungsgemäßen Verfahrens werden die Aktoren 14, 60, die die hinteren Räder 10, 56 an der Hinterachse des Fahrzeugs 2 mit dessen Aufbau 6 verbinden, bei der Steigungsauffahrt im Vergleich zu den beiden Aktoren 12, 58, die die vorderen Räder 8, 54 an der Vorderachse des Fahrzeugs 2 mit dessen Aufbau 6 verbinden, um eine größere Strecke verlängert. Bei der Fahrt auf einer waagrecht orientierten Fahrbahn werden die Längen der Aktoren 12, 14, 58, 60 gleich eingestellt. Bei der Steigungsabfahrt werden die Aktoren 12, 58, die die beiden vorderen Räder 8, 54 mit dem Aufbau 6 des Fahrzeugs 2 verbinden, um eine größere Strecke als die Aktoren 14, 60, die die Räder 10, 56 der Hinterachse des Fahrzeugs 2 mit dessen Aufbau 6 verbinden, verlängert. Allerdings ist die Verlängerung der Aktoren 12, 58 an der Vorderachse gegenüber den Aktoren 14, 60 an der Hinterachse bei der Steigungsabfahrt geringer als die Verlängerung der Aktoren 14, 60 gegenüber den Aktoren 12, 58 bei der Steigungsauffahrt.

Bei der anhand von Figur 3b dargestellten Fahrt des Fahrzeugs 2 durch eine Steilkurve entlang der Fahrbahn 4, die hier exemplarisch nach links geneigt ist, werden bei Durchführung des Verfahrens die beiden Aktoren 12, 14, die den beiden Rädern 8, 10 auf der linken Seite des Fahrzeugs 2 zugeordnet sind, um eine größere Strecke verlängert als die beiden Aktoren 58, 60, die den beiden Rädern 54, 56 auf der rechten Seite des Fahrzeugs 2 zugeordnet sind. Sofern das Fahrzeug 2 alternativ eine nach rechts geneigte Kurve bzw. Steilkurve entlang der Fahrbahn 4 durchfahren sollte, werden umgekehrt die beiden Aktoren 58, 60 der Räder 54, 56 auf der rechten Seite des Fahrzeugs 2 stärker als jene Aktoren 12, 14 der Räder 8, 10 auf der linken Seite des Fahrzeugs 2 verlängert.

Eine Kompensation bzw. ein Ausgleich der Neigung des Aufbaus 6 des Fahrzeugs 2, der wiederum durch eine Neigung der Fahrbahn 4 bedingt ist, wird im Rahmen des Verfahrens in einem ersten, niedrigen Frequenzbereich durchgeführt. Unabhängig von einer Neigung der Fahrbahn 4, die eine komplette Oberfläche der Fahrbahn 4 betrifft, kann die Fahrbahn 4 weiterhin Unebenheiten aufweisen, die die Oberfläche der Fahrbahn 4 nur punktweise charakterisieren. Ergänzend zur Kompensation der Neigung werden im Rahmen des Verfahrens auch Änderungen von vertikal orientierten Bewegungen des Aufbaus 6 des Fahrzeugs 2, die durch derartige Unebenheiten der Fahrbahn 4 verursacht werden, in einem zweiten, hohen Frequenzbereich ausgeglichen.

Zur Kompensation vertikal orientierter Bewegungen des Aufbaus 6 werden Längen der Aktoren 12, 14, 58, 60 frequenzabhänig verändert. Hierzu werden den Aktoren von dem Kontrollgerät 18 frequenzabhängige Stellsignale bereitgestellt, durch die Längen der Aktoren 12, 14, 58, 60 eingestellt werden. Hierbei werden Stellsignale, die zur Horizontierung des Aufbaus 6 aufgrund der Neigung der Fahrbahn 4 vorgesehen sind, sowie Stellsignale zum Ausgleich von Schwingungen des Aufbaus 6 aufgrund von Unebenheiten der Fahrbahn 4 miteinander frequenzabhängig überlagert.

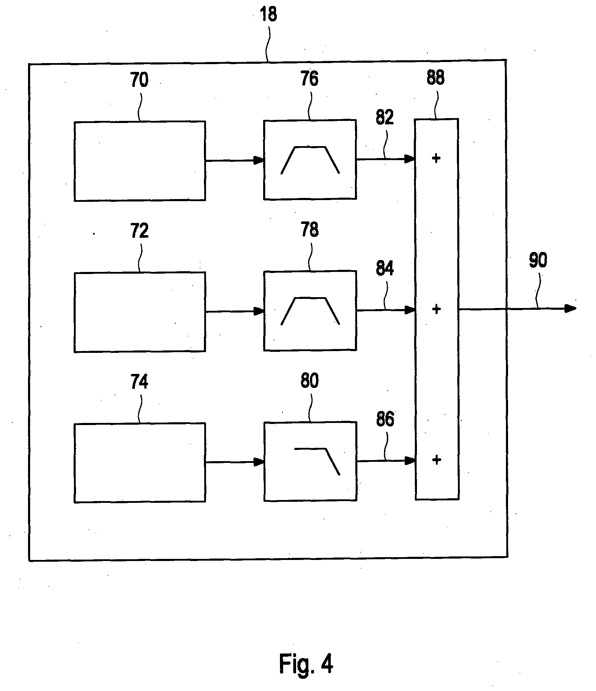

Details hierzu gehen aus Figur 4 hervor, in der das Kontrollgerät 18 des erfindungsgemäßen Systems 16 im Detail schematisch dargestellt ist.

Dieses Kontrollgerät 18 umfasst drei Regler, nämlich einen Grundregler 70, einen Vorausschauregler 72 sowie einen Horizontierungsregler 74. Dabei ist hier dem Grundregler 70 ein Bandpassfilter 76 zur Durchführung einer Bandpassfilterung im hohen Frequenzbereich nachgeschaltet. Dem Vorausschauregler 72 ist ebenfalls ein Bandpassfilter 78 zur Durchführung einer Bandpassfilterung im hohen Frequenzbereich nachgeschaltet. Dem Horizontierungsregler 74 ist dagegen ein Tiefpassfilter 80 zur Durchführung einer Tiefpassfilterung im niedrigen Frequenzbereich nachgeschaltet. In einer alternativen Ausgestaltung des Kontrollgeräts 18 ist es eventuell möglich, dass der Bandpassfilter 76 in den Grundregler 70 integriert ist. In diesem Fall ist es ebenfalls möglich, den Bandpassfilter 78 in den Vorausschauregler 72 zu integrieren. Entsprechend ist der Tiefpassfilter 80 in den Horizontierungsfilter 74 integriert.

Unabhängig von einem konkreten Aufbau des Kontrollgeräts 18 werden bei der Ausführungsform des erfindungsgemäßen Verfahrens von dem Grundregler 70 und dem ihm nachgeschalteten oder darin integrierten Bandpassfilter 76 erste Stellsignale 82 in dem hohen Frequenzbereich bereitgestellt, durch die Unebenheiten der befahrenen Fahrbahn 4 zu kompensieren sind. Ergänzend werden von dem Vorausschauregler 72 und dem ihm nachgeschalteten oder darin integrierten Bandpassfilter 78 ebenfalls Stellsignale in dem hohen Frequenzbereich bereitgestellt, durch die Unebenheiten der Fahrbahn 4 zu kompensieren sind. Dagegen werden von dem Horizontierungsregler 74 und dem Tiefpassfilter 80, unabhängig davon, ob der Tiefpassfilter 80 in dem Horizontierungsregler 74 integriert oder diesem nachgeschaltet ist, Stellsignale 80 im niedrigen Frequenzbereich bereitgestellt, durch die eine Neigung der Fahrbahn 4 zu kompensieren ist. Weiterhin umfasst das Kontrollgerät 18 ein Additionsmodul 88, dem die Stellsignale 82, 84 des hohen Frequenzbereis sowie die Stellsignale 86 des niedrigen Frequenzbereich bereitgestellt werden. Das Additionsmodul 88 ist dazu ausgebildet, sämtliche Stellsignale 82, 84, 86 miteinander zu addieren und einem jeweiligen Aktor 12, 14, 58, 60 ein Stellsignal 90 bereitzustellen, das eine Addition und/oder Superposition sämtlicher Stellsignale 82, 84, 86 frequenzabhängig umfasst. Auf Grundlage eines derartigen Stellsignals 90 wird eine Länge eines jeweiligen Aktors 12, 14, 58, 60 sowohl in dem niedrigen Frequenzbereich als auch in dem hohen Frequenzbereich verändert bzw. variiert und somit angepasst, wobei durch eine Änderung der Länge in dem niedrigen Frequenzbereich eine Neigung der bspw. als Straße ausgebildete Fahrbahn 4 und durch Änderung der Länge in dem hohen Frequenzbereich Unebenheiten der Fahrbahn 4 kompensiert wird.

Hierbei ist in Ausgestaltung vorgesehen, dass der Grundregler 70 beispielsweise nach dem Skyhook-Algorithmus eingestellt wird. Statt dem Grundregler 70 ist auch jeder andere Regler, über den Unebenheiten der Fahrbahn 4 kompensiert werden können, einsetzbar.

Ein Höhenprofil der Fahrbahn 4 in Fahrtrichtung vor dem Kraftfahrzeug 2 wird über eine Vorausschausensorik, bspw. eine Kamera oder einen Laser, erfasst. Hierbei detektierte Unebenheiten werden dann mit dem Vorausschauregler 74 proaktiv kompensiert, indem Längen der Aktoren 12, 14, 58, 60 entlang des erfassten Höhenprofils eingestellt werden.

Die von den genannten Reglern bereitgestellten Stellsignale 82, 84, 86, 90 umfassen Werte für eine Länge bzw. einen Stellweg oder alternativ eine Kraft, die für einen jeweiligen Aktor 12, 14, 58, 60 einzustellen ist, wobei der Stellweg oder die Kraft ineinander umgerechnet werden können.

Mit der oben beschriebenen Ausführungsform des Verfahrens werden Stellsignale 82, 84, 86, 90 errechnet, die, abhängig von den Rohsignalen und einer Bearbeitungskette, zunächst ein breites Frequenzspektrum beinhalten. Damit sich die verschiedenen Regler nicht gegenseitig negativ beeinflussen, werden dann über die Bandpassfilter 76, 78 bzw. Hochpassfilter sowie den Tiefpassfilter 80 jene Anteile der Signale extrahiert, die für die Regelung des Kraftfahrzeugs 2 jeweils relevant sind. So können beispielsweise durch den Horizontierungsregler 74 berechnete Stellwege Frequenzanteile über 0,5 Hz enthalten. Allerdings wird im Rahmen des Verfahrens auf derart hohe Frequenzen nicht mehr reagiert, wodurch ein unerwünschtes Fahrverhalten zu vermeiden ist. Der Skyhook-Algorithmus für den Grundregler 70 ist für diesen höheren Frequenzbereich dagegen besser als für Frequenzen unterhalb 0,5 Hz geeignet.

**Patentansprüche**

1. Verfahren zum Kompensieren von vertikal orientierten Bewegungen eines Aufbaus (6) eines Fahrzeugs (2), wobei das Fahrzeug (2) den Aufbau (6) und ein aktives Fahrwerk mit mehreren Rädern (8, 10, 54, 56) aufweist, die sich mit der Fahrbahn (4) in Kontakt befinden, wobei jedes Rad (8, 10, 54, 56) über einen in seiner Länge verstellbareren Aktor (12, 14, 58, 60) an einem dem Rad (8, 10, 54, 56) zugeordneten Aufhängepunkt mit dem Aufbau (6) verbunden ist,

   - wobei vertikal orientierte Bewegungen des Aufbaus (6) durch eine Neigung der Fahrbahn (4) und/oder durch Unebenheiten der Fahrbahn (4) verursacht werden,
   - wobei eine erste Änderung der Länge mindestens eines Aktors (12, 14, 58, 60) zur Kompensation der Neigung der Fahrbahn (4) für Frequenzen in einem ersten, niedrigen Frequenzbereich, der durch eine erste Minimalfrequenz und eine erste Maximalfrequenz begrenzt wird, und/oder
   - wobei eine zweite Änderung der Länge des mindestens einen Aktors (12, 14, 58, 60) zur Kompensation von Unebenheiten der Fahrbahn (4) für Frequenzen in einem zweiten, hohen Frequenzbereich, der durch eine zweite Minimalfrequenz und eine zweite Maximalfrequenz begrenzt ist, durchgeführt wird,
   - wobei mindestens eine Minimalfrequenz und/oder mindestens eine Maximalfrequenz an eine Eckfrequenz bzw. Grenzfrequenz mindestens eines der Aktoren (12, 14, 58, 60) angepasst wird.

2. Verfahren nach Anspruch 1, bei dem eine Neigung des Aufbaus (6) in die zumindest eine Raumrichtung ermittelt wird, wobei für mindestens ein Rad (8, 10, 54, 56) ein vertikaler Abstand zu dem ihm zugeordneten Aufhängepunkt des Aufbaus (6) erfasst wird, wobei über den mindestens einen ermittelten Abstand eine Neigung des Fahrwerks in die zumindest eine Raumrichtung durch Transformation des vertikalen Abstands des mindestens einen Rads (8, 10, 54, 56) zu dem Aufbau (6) mit einer Transformationsmatrix

$$T = \begin{bmatrix} l_v & l_v & -l_h & -l_h \\ t_v & -t_v & t_h & -t_h \end{bmatrix}$$

berechnet wird, wobei die Neigung der Fahrbahn (4) in die zumindest eine Raumrichtung aus einer Differenz der Neigung des Aufbaus (6) in die zumindest eine Raumrichtung und der Neigung des Fahrwerks in die zumindest eine Raumrichtung ermittelt wird, wobei jeweils ein Wert für mindestens einen Winkel $\phi_s$, $\theta_s$, um den die Fahrbahn (6) in die zumindest eine Raumrichtung geneigt ist, ermittelt wird, wobei jeweils ein Grenzwert $\phi_{s,lim}$, $\theta_{s,lim}$ für den Wert des mindestens einen Winkels $\phi_s$, $\theta_s$ vorgegeben wird, wobei Übersetzungsverhältnisse $i_{VA}$, $i_{HA}$ für einen Abstand des mindestens einen Aktors (12, 14, 58, 60) bezogen auf den Aufbau (6) und für einen Abstand des mindestens einen Rads (8, 10, 54, 56) bezogen auf den Aufbau (6) berücksichtigt werden, wobei ein Soll-Wert für eine Änderung der Länge des mindestens einen Aktors (12, 14, 58, 60) durch:

$$\overrightarrow{z_{akt}} = \mathrm{diag}(i_{VA}, i_{VA}, i_{HA}, i_{HA}) T^T \begin{bmatrix} \phi_{s,lim} \\ \theta_{s,lim} \end{bmatrix}$$

bestimmt wird.

3. Verfahren nach Anspruch 2, bei dem die Neigung des Fahrwerks in die mindestens eine Raumrichtung durch Transformation des vertikalen Abstands des mindestens einen Rads (8, 10, 54, 56) zu einen Schwerpunkt (25) des Aufbaus (6) mit der Transformationsmatrix

$$T = \begin{bmatrix} l_v & l_v & -l_h & -l_h \\ t_v & -t_v & t_h & -t_h \end{bmatrix}$$

ermittelt wird, wobei eine vordere, longitudinale Strecke $l_v$ einen Abstand eines jeweiligen vorderen Rads (8, 54) von einem Schwerpunkt (25) des Aufbaus (6) in longitudinaler Raumrichtung, eine hintere, longitudinale Strecke $l_h$ den Abstand des jeweiligen hinteren Rads (10, 56) von dem Schwerpunkt (25) in longitudinaler Raumrichtung, eine vordere, transversale Strecke $t_v$ den Abstand des vorderen Rads (8, 54) von dem Schwerpunkt (25) in transversaler Raumrichtung und eine hintere, transversale Strecke $t_h$ den Abstand des hinteren Rads (10, 56) von dem Schwerpunkt (25) in transversaler Raumrichtung beschreibt.

4. Verfahren nach Anspruch 2 oder 3, bei dem die Übersetzungsverhältnisse $i_{VA}$, $i_{HA}$ über einen Abstand jeweils eines Aktors (12, 14, 58, 60) von dem Schwerpunkt (25) des Aufbaus (6) und jeweils eines Rads (8,10, 54, 56) von dem Schwerpunkt (25) des Aufbaus (6) berechnet werden.

5. Verfahren nach einem der Ansprüche 2 bis 4, bei dem bei Vorliegen einer Steigungsauffahrt ein negativer Nickwinkel $\theta_s$ und bei Vorliegen einer Steigungsabfahrt ein positiver Nickwinkel $\theta_s$ ermittelt wird.

6. Verfahren nach einem der Ansprüche 2 bis 5, bei dem der jeweilige Grenzwert $\phi_{s,lim}$, $\theta_{s,lim}$ für den Wert des mindestens einen Winkels $\phi_s$, $\theta_s$ durch:

$$\phi_{s,lim} = \begin{cases} \phi_{s,max} & \text{wenn } \phi_s > \phi_{s,max} \\ \phi_{s,min} & \text{wenn } \phi_s < \phi_{s,min} \\ \phi_s & \text{sonst} \end{cases}$$

$$\theta_{s,lim} = \begin{cases} \theta_{s,max} & \text{wenn } \theta_s > \theta_{s,max} \\ \theta_{s,min} & \text{wenn } \theta_s < \theta_{s,min} \\ \theta_s & \text{sonst} \end{cases}$$

vorgegeben wird, wobei ein Betrag von $\theta_{s,min}$ im Fall der Steigungsauffahrt größer als ein Betrag von $\theta_{s,max}$ im Fall der Steigungsabfahrt gewählt wird.

7. Verfahren nach einem der voranstehenden Ansprüche, bei dem zum Ermitteln der Neigung des Aufbaus (6) ein erstes, aufbaufestes Koordinatensystem (24) und zum Ermitteln der Neigung des Fahrwerks ein zweites fahrwerkfestes Koordinatensystem (26) verwendet wird, und wobei ein drittes, inertiales Koordinatensystem (28) als Referenz-Koordinatensystem verwendet wird, das auf die Gravitationskraft bezogen ist.

8. Verfahren nach Anspruch 7, bei dem die Neigung des Aufbaus (6) bezüglich des Referenz-Koordinatensystems über ein Quaternion beschrieben wird.

9. Verfahren nach einem der Ansprüche 2 bis 8, bei dem ein Strapdown-Algorithmus verwendet wird, mit dem vorgesehen ist, dass zum Ermitteln einer korrigierten Beschleunigung des Fahrzeugs (2) eine sensorische gemessene Beschleunigung um eine Zentrifugalbeschleunigung und die Gravitationsbeschleunigung korrigiert wird und daraus eine Geschwindigkeit des Fahrzeugs (2) in einer Ebene bestimmt wird, und dass die Neigung des Aufbaus (6) berechnet wird.

10. Verfahren nach einem der voranstehenden Ansprüche, bei dem Schwingungen, die bei Überfahren der Unebenheiten auftreten, durch einen Algorithmus zur kontinuierlichen Dämpfungskontrolle in dem zweiten, hohen Frequenzbereich kompensiert werden.

11. System zum Kompensieren einer Neigung eines Fahrzeugs (2) in zumindest einer Raumrichtung, wobei das Fahrzeug (2) einen Aufbau (6) und ein aktives Fahrwerk mit mehreren Rädern (8, 10, 54, 56) aufweist, die sich mit der Fahrbahn (4) in Kontakt befinden, wobei das System (16) mehrere Sensoren (19, 20, 22) und ein Kontrollgerät (18) aufweist, wobei jedes Rad (8, 10, 54, 56) über einen in seiner Länge verstellbareren Aktor (12, 14, 58, 60) an einem dem Rad (8, 10, 54, 56) zugeordneten Aufhängepunkt mit dem Aufbau (6) verbunden ist,

- wobei vertikal orientierte Bewegungen des Aufbaus (6) durch eine Neigung der Fahrbahn (4) und/oder durch Unebenheiten der Fahrbahn (4) verursacht werden,
- wobei das Kontrollgerät dazu ausgebildet ist, den Aktoren (12, 14, 58, 60) Stellsignale bereitzustellen und deren Länge zu kontrollieren, wobei eine erste Änderung der Länge mindestens eines Aktors (12, 14, 58, 60) zur Kompensation der Neigung der Fahrbahn (4) für Frequenzen in einem ersten, niedrigen Frequenzbereich, der durch eine erste Minimalfrequenz und eine erste Maximalfrequenz begrenzt ist, und/oder wobei eine zweite Änderung der Länge des mindestens einen Aktors (12, 14, 58, 60) zur Kompensation von Unebenheiten der Fahrbahn (4) für Frequenzen in einem zweiten, hohen Frequenzbereich, der durch eine zweite Minimalfrequenz und eine zweite Maximalfrequenz begrenzt ist, durchzuführen ist,
- wobei das Kontrollgerät dazu ausgebildet ist, mindestens eine Minimalfrequenz und/oder mindestens eine Maximalfrequenz an eine Eckfrequenz bzw. Grenzfrequenz mindestens eines der Aktoren (12, 14, 58, 60) anzupassen.

12. System nach Anspruch 11, bei dem der mindestens eine zweite Sensor (20, 22) als Abstandssensor ausgebildet ist.

13. System nach einem der Ansprüche 11 oder 12, bei dem das Kontrollgerät (18) einen Horizontierungsregler (74) aufweist, dem ein Tiefpassfilter (80) nachgeschaltet ist, die dazu ausgebildet sind, Stellsignale im niedrigen Frequenzbereich bereitzustellen.

14. System nach einem der Ansprüche 11 bis 13, bei dem das Kontrollgerät (18) einen Grundregler (70) aufweist, dem ein Bandpassfilter (76) nachgeschaltet ist, der dazu ausgebildet ist, Stellsignale im hohen Frequenzbereich bereitzustellen.

15. System nach einem der Ansprüche 11 bis 14, bei dem das Kontrollgerät (18) einen Vorausschauregler (72) aufweist, dem ein Bandpassfilter (78) nachgeschaltet ist, der dazu ausgebildet ist, Stellsignale im hohen Frequenzbereich bereitzustellen.

**Claims**

1. Method for compensating vertically oriented movements of a body (6) of a vehicle (2), wherein the vehicle (2) is provided with the body (6) and with an active undercarriage having several wheels (8, 10, 54, 56) which are in contact with the road (4), wherein each wheel (8, 10, 54, 56) is connected to the body (6) by means of an actuator (12, 14, 58, 60) which is adjustable over its length to a suspension point assigned to a wheel (8, 10, 54, 56),

- wherein vertically oriented movements of the body (6) are caused by an inclination of the road (4) and/or by the unevenness of the road (4),
- wherein a first change of the length of at least one actuator (12, 14, 58, 60) is carried out for compensating for the inclination of the road (4) for frequencies in a first, lower frequency range, which is limited by a first minimum frequency and a first maximum frequency, and/or
- wherein a second change of the length of the at least one actuator (12, 14, 58, 60) is carried out for compensating for unevenness of the road (4) for frequencies in a second, high frequency range, which is limited by a second minimum frequency and a second maximum frequency,
- wherein at least one minimum frequency and/or at least one maximum frequency is adjusted to a base frequency or cut-off frequency of at least one of the actuators (12, 14, 58, 60).

2. Method according to claim 1, wherein an inclination of the body (6) is determined in at least one spatial direction, wherein a vertical distance to an associated suspension point of the body (6) is determined for at least one wheel (8, 10, 54, 56), wherein by at least one determined distance an inclination of the undercarriage is calculated in the at least one spatial direction with a transformation of the vertical distance of the at least one wheel (8, 10, 54, 56) to the body (6) with a transformation matrix

$$T = \begin{bmatrix} l_v & l_v & -l_h & -l_h \\ t_v & -t_v & t_h & -t_h \end{bmatrix}$$

wherein the inclination of the road (4) is determined in at least one spatial direction from a difference of the inclination of body (6) in the at least one spatial direction, and the inclination of the undercarriage in the at least one spatial direction, wherein in each case respectively a value for at least one angle $\phi_s$, $\theta_s$ is determined, about which the road (6) is inclined in at least one spatial direction, wherein respectively a limit value $\phi_{s,lim}$, $\theta_{s,lim}$ is specified for the value of at least one angle $\phi_s$, $\theta_s$, wherein transmission ratios $i_{VA}$, $i_{HA}$ for a distance of the at least one actuator (12, 14, 58, 60) relative to the body (6) and for a distance of the at least one wheel (8, 10, 54, 56) relative to the body (6) are taken into consideration, and wherein a target value for a change in length of the at least one actuator (12, 14, 58, 60) is determined by

$$\overrightarrow{z_{akt}} = \text{diag}(i_{VA}, i_{VA}, i_{HA}, i_{HA})T^T \begin{bmatrix} \phi_{s,lim} \\ \theta_{s,lim} \end{bmatrix}.$$

3. Method according to claim 2, wherein the inclination of the road in the at least one spatial direction is determined by a transformation of the vertical distance of the at least one wheel (8, 10, 54, 56) to a centre of gravity (25) of the body (6) with the transformation matrix

$$T = \begin{bmatrix} l_v & l_v & -l_h & -l_h \\ t_v & -t_v & t_h & -t_h \end{bmatrix}$$

wherein a front, longitudinal distance $l_v$ describes a distance of a respective front wheel (8, 54) from a centre of gravity (25) of the body (6) in the longitudinal spatial direction, a rear, longitudinal distance $l_h$ describes the distance of the respective rear wheel (10, 56) from the centre of gravity (25) in longitudinal spatial direction, a front, transversal distance $t_v$, describes the distance of the front wheel (8, 54) from the centre of gravity (25) in the transversal spatial direction and a rear, transversal distance $t_h$ describes the distance of the rear wheel (10, 56) from the centre of gravity (25) in the transversal spatial direction.

4. Method according to claim 2 or 3, wherein the transmission ratios $i_{VA}$, $i_{HA}$ are determined over a distance of a respective actuator (12, 14, 58, 60) from the centre of gravity (25) of the body (6) and of a respective wheel (8, 10, 54, 56) from the centre of gravity (25) of the body (6).

5. Method according to any of claims 2 to 4, wherein a negative pitch angle $\theta_s$ is determined when an ascending slope is present, and a positive pitch angle $\theta_s$ is determined when a descending slope is present.

6. Method according to any of claims 2 to 5, wherein the respective limiting values $\phi_{s,lim}$, $\theta_{s,lim}$ for the value of at least one angle $\phi_s$, $\theta_s$ are determined by

$$\phi_{s,lim} = \begin{cases} \phi_{s,max} \text{ if } & \phi_s > \phi_{s,max} \\ \phi_{s,min} \text{ if } & \phi_s < \phi_{s,min} \\ \phi_s \text{ otherwise} \end{cases}$$

$$\theta_{s,lim} = \begin{cases} \theta_{s,max} \text{ if } & \theta_s > \theta_{s,max} \\ \theta_{s,min} \text{ if } & \theta_s < \theta_{s,min} \\ \theta_s \text{ otherwise} \end{cases}$$

wherein an amount of $\theta_{s,min}$ is selected in the case of an ascending slope to be greater than an amount of $\theta_{s,max}$ in the case of a descending slope.

7. Method according to any of the preceding claims, wherein for determining the inclination of the body (6), a first coordinate system (24) that is fixed to the body is used, a second coordinate system (26) that is fixed to the undercarriage is used in order to determine the inclination of the undercarriage, and wherein a third inertial coordinate system (28) is used as a reference coordinate system which is related to the gravitational force.

**8.** Method according to the claim 7, wherein the inclination of the body (6) is described with regard to the reference coordinate system by means of a quaternion.

**9.** Method according to any of claims 2 to 8, wherein a strapdown algorithm is used so that in order to determine a corrected acceleration of the vehicle (2) an acceleration measured by a system of sensors is corrected by a centrifugal acceleration and the gravitational acceleration and from this the speed of the vehicle (2) is determined in a plane, and the inclination of the body (6) is calculated.

**10.** Method according to any of the preceding claims, wherein the vibrations that occur when driving over uneven areas are compensated for with an algorithm for a continuous damping control in the second high frequency range.

**11.** System for compensating for an inclination of a vehicle (2) in at least one spatial direction, wherein the vehicle (2) has a body (6) and an active undercarriage having a plurality of wheels (8, 10, 54, 56) that are in contact with the road (4), wherein the system (16) is equipped with a plurality of sensors (19, 20, 22) and with a control device (18), wherein each wheel (8, 10, 54, 56) is connected by an actuator (12, 14, 58, 60) adjustable in length to the body (6) at a suspension point associated with one of the wheels (8, 10, 54, 56),

- wherein vertically oriented movements of the body (6) are caused by an inclination of the road (4) and/or by unevenness of the road (4),
- wherein the control device is designed to provide actuating signals to the actuators (12, 14, 58, 60) and to control their length, wherein a first change of the length of at least one actuator (12, 14, 58, 60) for compensating the inclination of the road (4) is to be carried out for frequencies in a first, lower frequency range, which is limited by a first minimum frequency and by a first maximum frequency, and/or wherein a second change of the length of the at least one actuator (12, 14, 58, 60) for compensating unevenness of the road (4) for frequencies in a second, high frequency range is to be carried out in a second, high frequency range that is limited by a second minimum frequency and a second maximum frequency,
- wherein the control device is designed to adjust at least one minimum frequency and/or at least one maximum frequency to a base frequency or cut-off frequency of at least one of the actuators (12, 14, 58, 60).

**12.** System according to claim 11, wherein the at least one second sensor (20, 22) is designed as a distance sensor.

**13.** System according to any of claims 11 or 12, wherein the control device (18) is provided with a horizontal levelling controller (74), which is provided with a low-pass filter (80) connected downstream, which is designed to provide actuating signals in the low frequency range.

**14.** System according to any of claims 11 to 13, wherein the control device (18) is provided with a basic controller (70), which is provided with a band-pass filter (76) connected downstream, which is designed to provide actuating signals in the high frequency range.

**15.** System according to any of claims 11 to 14, wherein the control device (18) is provided with a predictive regulator (72), which is provided with a band-pass filter (78) connected downstream, which is designed to provide actuating signals in the high frequency range.

**Revendications**

**1.** Procédé de compensation de mouvements orientés verticalement d'une carrosserie (6) d'un véhicule (2), dans lequel le véhicule (2) comporte la carrosserie (6) et un châssis actif avec plusieurs roues (8, 10, 54, 56) qui se trouvent en contact avec la chaussée (4), dans lequel chaque roue (8, 10, 54, 56) est reliée à la carrosserie (6) au niveau d'un point de suspension associé à la roue (8, 10, 54, 56) par l'intermédiaire d'un actionneur (12, 14, 58, 60) de longueur réglable,

- dans lequel des mouvements orientés verticalement de la carrosserie (6) sont provoqués par une inclinaison de la chaussée (4) et/ou par des déformations de la chaussée (4),

- dans lequel on effectue une première modification de la longueur d'au moins un actionneur (12, 14, 58, 60) en vue de la compensation de l'inclinaison de la chaussée (4) pour des fréquences dans une première plage de fréquence basse qui est limitée par une première fréquence minimale et par une première fréquence maximale, et/ou

- dans lequel on effectue une deuxième modification de la longueur d'au moins un actionneur (12, 14, 58, 60) en vue de la compensation de déformations de la chaussée (4) pour des fréquences dans une deuxième plage de fréquence haute qui est limitée par une deuxième fréquence minimale et par une deuxième fréquence maximale,

- dans lequel au moins une fréquence minimale et/ou au moins une fréquence maximale sont adaptées à une fréquence de coupure ou fréquence limite au moins d'un des actionneurs (12, 14, 58, 60).

**2.** Procédé selon la revendication 1, dans lequel on détermine une inclinaison de la carrosserie (6) dans l'au moins une direction spatiale, dans lequel on détecte pour au moins une roue (8, 10, 54, 56) une distance verticale au point de suspension, associé à ladite roue, de la carrosserie (6), dans lequel on calcule par l'intermédiaire de l'au moins une distance déterminée une inclinaison de la carrosserie dans l'au moins une direction spatiale en transformant la distance verticale de l'au moins une roue (8, 10, 54, 56) à la carrosserie (6) avec une matrice de transformation

$$T = \begin{bmatrix} l_v & l_v & -l_h & -l_h \\ t_v & -t_v & t_h & -t_h \end{bmatrix}$$

dans lequel on détermine l'inclinaison de la chaussée (4) dans l'au moins une direction spatiale à partir d'une différence entre l'inclinaison de la carrosserie (6) dans l'au moins une direction spatiale et l'inclinaison du châssis dans l'au moins une direction spatiale, dans lequel on détermine à chaque fois une valeur pour l'au moins un angle $\varphi_S$, $\theta_S$ duquel la chaussée (6) est inclinée dans l'au moins une direction spatiale, dans lequel on prescrit à chaque fois une valeur limite $\varphi_{S,lim}$, $\theta_{S,lim}$ pour la valeur de l'au moins un angle $\varphi_S$, $\theta_S$, dans lequel on prend en compte des rapports de transformation $i_{VA}$, $i_{HA}$ pour une distance de l'au moins un actionneur (12, 14, 58, 60) par rapport à la carrosserie (6) et pour une distance de l'au moins une roue (8, 10, 54, 56) par rapport à la carrosserie (6), dans lequel on détermine une valeur de consigne pour une modification de la longueur de l'au moins un actionneur (12, 14, 58, 60) par :

$$\overrightarrow{z_{akt}} = \text{diag}(i_{VA}, i_{VA}, i_{HA}, i_{HA}) T^T \begin{bmatrix} \phi_{s,lim} \\ \theta_{s,lim} \end{bmatrix}$$

**3.** Procédé selon la revendication 2, dans lequel on détermine l'inclinaison du châssis dans l'au moins une direction spatiale en transformant la distance verticale de l'au moins une roue (8, 10, 54, 56) à un centre de gravité (25) de la carrosserie (6) avec la matrice de transformation

$$T = \begin{bmatrix} l_v & l_v & -l_h & -l_h \\ t_v & -t_v & t_h & -t_h \end{bmatrix}$$

dans lequel un segment longitudinal avant $l_v$ décrit une distance d'une roue avant respective (8, 54) à un centre de gravité (25) de la carrosserie (6) dans la direction spatiale longitudinale, un segment longitudinal arrière $l_h$ décrit la distance de la roue arrière respective (10, 56) au centre de gravité (25) dans la direction spatiale longitudinale, un segment transversal avant $t_v$ décrit la distance de la roue avant (8, 54) au centre de gravité (25) dans la direction spatiale transversale et un segment transversal arrière $t_h$ décrit la distance de la roue arrière (10, 56) au centre de gravité (25) dans la direction spatiale transversale.

**4.** Procédé selon la revendication 2 ou 3, dans lequel on calcule les rapports de transformation $i_{VA}$, $i_{HA}$ sur une distance respectivement d'un actionneur (12, 14, 58, 60) au centre de gravité (25) de la carrosserie (6) et respectivement d'une roue (8, 10, 54, 56) au centre de gravité (25) de la carrosserie (6).

**5.** Procédé selon l'une quelconque des revendications 2 à 4, dans lequel, on détermine un angle d'inclinaison longitudinale $\theta_S$ négatif en présence d'une montée de pente et un angle d'inclinaison longitudinale $\theta_S$ positif en présence d'une descente de pente.

**6.** Procédé selon l'une quelconque des revendications 2 à 5, dans lequel on prescrit la valeur limite respective $\varphi_{S,lim}$, $\theta_{S,lim}$ pour la valeur de l'au moins un angle $\varphi_S$, $\theta_S$ par :

$$\phi_{s,lim} = \begin{cases} \phi_{s,max} \text{ si} & \phi_s > \phi_{s,max} \\ \phi_{s,min} \text{ si} & \phi_s < \phi_{s,min} \\ \phi_s \text{ sinon} \end{cases}$$

$$\theta_{s,lim} = \begin{cases} \theta_{s,max} \text{ si} & \theta_s > \theta_{s,max} \\ \theta_{s,min} \text{ si} & \theta_s < \theta_{s,min} \\ \theta_s \text{ sinon} \end{cases}$$

dans lequel on choisit une valeur de $\theta_{S,min}$ dans le cas de la montée de pente supérieure à une valeur de $\theta_{S,max}$ dans le cas de la descente de pente.

**7.** Procédé selon l'une quelconque des revendications précédentes, dans lequel on utilise pour déterminer l'inclinaison de la carrosserie (6) un premier système de coordonnées (24) solidaire de la carrosserie et pour déterminer l'inclinaison du châssis un deuxième système de coordonnées (26) solidaire du châssis et dans lequel on utilise un troisième système de coordonnées (28) inertiel comme système de coordonnées de référence qui se rapporte à la force de gravitation.

**8.** Procédé selon la revendication 7, dans lequel on décrit l'inclinaison de la carrosserie (6) par rapport au système de coordonnées de référence par l'intermédiaire d'un quaternion.

**9.** Procédé selon l'une quelconque des revendications 2 à 8, dans lequel on utilise un algorithme lié dit Strapdown avec lequel il est prévu que, pour déterminer une accélération corrigée du véhicule (2), on corrige une accélération mesurée par capteur avec une accélération centrifuge et l'accélération de gravitation et on détermine à partir de là une vitesse du véhicule (2) dans un plan et dans lequel on calcule l'inclinaison de la carrosserie (6).

**10.** Procédé selon l'une quelconque des revendications précédentes, dans lequel on compense des oscillations qui apparaissent lors du passage sur des déformations par un algorithme destiné au contrôle continu d'amortissement dans la deuxième plage de fréquence haute.

**11.** Système de compensation d'une inclinaison d'un véhicule (2) dans au moins une direction spatiale, dans lequel le véhicule (2) comporte une carrosserie (6) et un châssis actif avec plusieurs roues (8, 10, 54, 56) qui se trouvent en contact avec la chaussée (4), dans lequel le système (16) comporte plusieurs capteurs (19, 20, 22) et un appareil de contrôle (18), dans lequel chaque roue (8, 10, 54, 56) est reliée à la carrosserie (6) au niveau d'un point de suspension associé à la roue (8, 10, 54, 56) par l'intermédiaire d'un actionneur (12, 14, 58, 60) de longueur réglable,

- dans lequel des mouvements orientés verticalement de la carrosserie (6) sont provoqués par une inclinaison de la chaussée (4) et/ou par des déformations de la chaussée (4),
- dans lequel l'appareil de contrôle est conçu pour fournir des signaux de réglage aux actionneurs (12, 14, 58, 60) et contrôler leur longueur, une première modification de la longueur d'au moins un actionneur (12, 14, 58, 60) devant être effectuée en vue de la compensation de l'inclinaison de la chaussée (4) pour des fréquences dans une première plage de fréquence basse qui est limitée par une première fréquence minimale et par une première fréquence maximale et/ou une deuxième modification de la longueur d'au moins un actionneur (12, 14, 58, 60) devant être effectuée en vue de la compensation de déformations de la chaussée (4) pour des fréquences dans une deuxième plage de fréquence haute qui est limitée par une deuxième fréquence minimale et par une deuxième fréquence maximale,
- dans lequel l'appareil de contrôle est conçu pour adapter au moins une fréquence minimale et/ou au moins une fréquence maximale à une fréquence de coupure ou fréquence limite d'au moins un des actionneurs (12, 14, 58, 60).

**12.** Système selon la revendication 11, dans lequel l'au moins un deuxième capteur (20, 22) est réalisé comme un capteur de distance.

**13.** Système selon l'une quelconque des revendications 11 ou 12, dans lequel l'appareil de contrôle (18) comporte un régulateur d'horizon (74) en aval duquel est branché un filtre passe-bas (80), lequel régulateur est conçu pour fournir des signaux de réglage dans la plage de fréquence basse.

**14.** Système selon l'une quelconque des revendications 11 à 13, dans lequel l'appareil de contrôle (18) comporte un régulateur de base (70) en aval duquel est branché un filtre passe-bande (76), lequel régulateur est conçu pour fournir des signaux de réglage dans la plage de fréquence haute.

**15.** Système selon l'une quelconque des revendications 11 à 14, dans lequel l'appareil de contrôle (18) comporte un régulateur prévisionnel (72) en aval duquel est branché un filtre passe-bande (78), lequel régulateur est conçu pour fournir des signaux de réglage dans la plage de fréquence haute.

Fig. 1

Fig. 2

Fig. 3 a

Fig. 3 b

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006026937 A1
- DE 102012024984 A1
- DE 102012216205 A1
- US 20140330483 A1
- US 6176494 B1
- DE 69315865 T2
- US 5034890 A1
- GB 2391327 A1